# EUROPEAN PATENT APPLICATION

(11) **EP 4 539 408 A1**
(43) Date of publication of application: **16.04.2025**
(21) Application number: 22945289.1
(22) Date of filing: 09.06.2022
(51) Int. Cl.: H04L 27/26

(54) **WIRELESS COMMUNICATION METHOD AND DEVICE**

(71) Applicant: GUANGDONG OPPO MOBILE TELECOMMUNICATIONS CORP., LTD., Dongguan, Guangdong 523860 (CN)
(72) Inventor: XU, Weijie, Dongguan, Guangdong 523860 (CN); ZUO, Zhisong, Dongguan, Guangdong 523860 (CN); HE, Chuanfeng, Dongguan, Guangdong 523860 (CN); CUI, Shengjiang, Dongguan, Guangdong 523860 (CN)
(74) Representative: RGTH
(86) International application number: PCT/CN2022/097890
(87) International publication number: WO 2023/236144

(57) **Abstract**

A wireless communication method and device are provided. The method includes: performing, by a first device, backscattering on a signal on a total bandwidth or a partial bandwidth of an orthogonal frequency division multiplexing (OFDM) signal to obtain a backscatter signal.

## Description

### TECHNICAL FIELD

Embodiments of the present application relate to the field of communications, and in particular to, a wireless communication method and a wireless communication device.

### BACKGROUND

In zero power consumption communication, a zero power consumption terminal may achieve backscatter communication based on radio waves. Due to the low complexity, the zero power terminal only supports simple modulation methods such as amplitude shift keying (ASK), whereas a conventional terminal uses relatively complex modulation waveforms such as orthogonal frequency division multiplexing (OFDM). Therefore, when a large number of zero power consumption terminals are accessed to the system, how to implement symbiotic communication between a zero power consumption terminal and a conventional terminal is an urgent problem that needs to be solved.

### SUMMARY

The present application provides a wireless communication method and a wireless communication device, which can implement symbiotic communication between a zero power consumption terminal and a conventional terminal.

In a first aspect, a wireless communication method is provided, and includes: performing, by a first device, backscattering on a signal on a total bandwidth or a partial bandwidth of an orthogonal frequency division multiplexing (OFDM) signal to obtain a backscatter signal.

In a second aspect, a wireless communication method is provided, and includes: receiving, by a second device, a backscatter signal, where the backscatter signal is obtained by a first device performing backscattering on a signal on a total bandwidth or a partial bandwidth of an orthogonal frequency division multiplexing (OFDM) signal.

In a third aspect, a terminal device is provided for performing the method in the first aspect or various implementations thereof.

Specifically, the terminal device includes a functional module for performing the method in the first aspect or various implementations thereof.

In a fourth aspect, a network device is provided for performing the method in the second aspect or various implementations thereof.

Specifically, the network device includes a functional module for performing the method in the aspect or various implementations thereof.

In a fifth aspect, a terminal device is provided and includes a processor and a memory. The memory is configured to store a computer program, and the processor is configured to call and run the computer program stored in the memory to perform the method in the first aspect or various implementations thereof.

In a sixth aspect, a network device is provided and includes a processor and a memory. The memory is configured to store a computer program, and the processor is configured to call and run the computer program stored in the memory to perform the method in the second aspect or various implementations thereof.

In a seventh aspect, a chip is provided for implementing the method in any of the first aspect to the second aspect or various implementations thereof.

Specifically, the chip includes: a processor configured to call a computer program from a memory and run the computer program to enable a device equipped with the device to perform the method in any of the first aspect to the second aspect or various implementations thereof.

In an eighth aspect, a computer-readable storage medium is provided for storing a computer program, where the computer program enables a computer to perform the method in any of the first aspect to the second aspect or various implementations thereof.

In a ninth aspect, a computer program product is provided and includes computer program instructions, where the computer program instructions enable a computer to perform the method in any of the first aspect to the second aspect or various implementations thereof.

In a tenth aspect, a computer program is provided. The computer program, when rum on a computer, enables the computer to perform the method in any of the first aspect to the second aspect or various implementations thereof.

Through the above technical solutions, when the first device accesses the system, backscattering may be performed using a signal on a total bandwidth or a partial bandwidth of a wideband OFDM signal, thereby implementing symbiotic communication with a conventional terminal in the system.

### BRIEF DESCRIPTION OF THE DRAWINGS

FIG. 1 is a schematic diagram of communication system architecture, in accordance with embodiments of the present application.
FIG. 2 is a schematic diagram of a zero power consumption communication system, in accordance with an example of the present application.
FIG. 3 is a principle diagram of power harvesting, in accordance with an embodiment of the present application.
FIG. 4 is a principle diagram of backscatter communication, in accordance with an embodiment of the present application.
FIG. 5 is a circuit principle diagram of resistive load modulation, in accordance with an embodiment of the present application.
FIG. 6 is a schematic diagram of a wireless communication method, in accordance with embodiments of the present application.
FIG. 7 is a schematic diagram of downlink signal based backscatter, in accordance with embodiments of the present application.
FIG. 8 is a schematic diagram of uplink signal based backscatter, in accordance with embodiments of the present application.
FIG. 9 is a schematic diagram of a single-carrier backscatter, in accordance with embodiments of the present application.
FIG. 10 is a schematic diagram of single-carrier backscatter in a case of multi-backscatter devices, in accordance with embodiments of the present application.
FIG. 11 is a schematic diagram of multi-carrier backscatter, in accordance with embodiments of the present application.
FIG. 12 is a schematic diagram of a system applicable to embodiments of the present application.
FIG. 13 is a schematic diagram of another system applicable to embodiments of the present application.
FIG. 14 is a schematic diagram of a symbiotic communication system model, in accordance with embodiments of the present application.
FIG. 15 is a schematic diagram of a signal relationship in a symbiotic communication system.
FIG. 16 is a schematic diagram of a sign feature of a backscatter signal, in accordance with embodiments of the present application.
FIG. 17 is a schematic diagram of resource mapping of data symbols in a way of the frequency domain first and then the time domain, in accordance with embodiments of the present application.
FIG. 18 is another schematic diagram of resource mapping of data symbols in a way of the frequency domain first and then the time domain, in accordance with embodiments of the present application.
FIG. 19 is a schematic block diagram of a communication device, in accordance with embodiments of the present application.
FIG. 20 is a schematic block diagram of another communication device, in accordance with embodiments of the present application.
FIG. 21 is a schematic block diagram of yet another communication device, in accordance with embodiments of the present application.
FIG. 22 is a schematic block diagram of a chip, in accordance with embodiments of the present application.
FIG. 23 is a schematic block diagram of a communication system, in accordance with embodiments of the present application.
FIG. 24 is a schematic block diagram of another communication system, in accordance with embodiments of the present application.

### DETAILED DESCRIPTION

Technical solutions in the embodiments of the present application will be described below with reference to the accompanying drawings in the embodiments of the present application. Obviously, the described embodiments are merely some but not all of the embodiments of the present application. Based on the embodiments of the present application, all other embodiments obtained by the ordinary skilled in the art without paying creative effort belong to the protection scope of the present application.

Technical solutions in the embodiments of the present application may be applied to various communication systems, such as a global system of mobile communication (GSM) system, a code division multiple access (CDMA) system, a wideband code division multiple access (WCDMA) system, a general packet radio service (GPRS), a long term evolution (LTE) system, an advanced long term evolution (LTE-A) system, a new radio (NR) system, an evolution system of the NR system, an LTE-based access to unlicensed spectrum (LTE-U) system, an NR-based access to unlicensed spectrum (NR-U) system, a non-terrestrial networks (NTN) system, a universal mobile telecommunications system (UMTS), a wireless local area network (WLAN), a wireless fidelity (WiFi), a 5th-generation (5G) communication system, a cellular Internet of Things system, a cellular passive Internet of Things system or other communication systems.

Generally speaking, traditional communication systems support a limited quantity of connections, which is easy to implement. However, with the development of communication technology, mobile communication systems will not only support traditional communication, but also support, for example, device to device (D2D) communication, machine to machine (M2M) communication, machine type communication (MTC), vehicle to vehicle (V2V) communication, or vehicle to everything (V2X) communication, and the embodiments of the present application may be applied to these communication systems as well.

Optionally, the communication system in the embodiments of the present application may be applied to a carrier aggregation (CA) scenario, a dual connectivity (DC) scenario, and may also be applied to a standalone (SA) network deployment scenario.

Optionally, the communication system in the embodiments of the present application may be applied to an unlicensed spectrum, and the unlicensed spectrum may also be considered as a shared spectrum. Alternatively, the communication system in the embodiments of the present application may be applied to a licensed spectrum, and the licensed spectrum may also be considered as an unshared spectrum.

In the embodiments of the present application, various embodiments will be described in conjunction with a network device and a terminal device. The terminal device may be referred to as a user equipment (UE), an access terminal, a user unit, a user station, a mobile station, a mobile platform, a remote station, a remote terminal, a mobile device, a user terminal, a terminal, a wireless communication device, a user agent, a user device or the like.

In the embodiments of the present application, the network device may be a device configured to communicating with a mobile device. The network device may be an access point (AP) in WLAN, a base station (base transceiver station, BTS) in GSM or CDMA, a base station (NodeB, NB) in WCDMA, an evolutional base station (evolutional Node B, eNB or eNodeB) in LTE, a relay station or an access point, an in-vehicle device, a wearable device, a network device (gNB) in an NR network, a network device in a cellular Internet of Things, a network device in a cellular passive Internet of Things, a network device in a future evolutional public land mobile network (PLMN) network, a network device in an NTN network, or the like.

As an example but not a limitation, in the embodiments of the present application, the network device may have mobile characteristics. For example, the network device may be a mobile device. Optionally, the network device may be a satellite or a balloon station. For example, the satellite may be a low earth orbit (LEO) satellite, a medium earth orbit (MEO) satellite, a geostationary earth orbit (GEO) satellite, or a high elliptical orbit (HEO) satellite. Optionally, the network device may also be a base station deployed on land, water, or other places.

In the embodiments of the present application, the network device may provide services for a cell, and the terminal device communicates with the network device through transmission resources (e.g., frequency-domain resources, or spectrum resources) used by the cell. The cell may be a cell corresponding to the network device (e.g., a base station). The cell may belong to a macro base station, or may belong to a base station corresponding to a small cell. The small cell here may include a metro cell, a micro cell, a pico cell, a femto cell, or the like. These small cells have characteristics of small coverage range and low transmission power, are applicable for providing data transmission services with high speed.

The terminal device may be a station (ST) in the WLAN, a cellular phone, a cordless phone, a session initiation protocol (SIP) phone, a wireless local loop (WLL) station, a personal digital assistant (PDA) device, a handheld device with wireless communication functions, a computing device or another processing device connected to a wireless modem, an in-vehicle device, a wearable device, a terminal device in a next generation communication system (e.g., an NR network), a terminal device in a future evolved public land mobile network (PLMN) network, a terminal device in a cellular Internet of Things, a terminal device in a cellular passive Internet of Things, or the like.

In the embodiments of the present application, the terminal device may be deployed on land including indoor or outdoor, handheld, wearable, or in-vehicle; alternatively, the terminal device may be deployed on water (e.g., on a steamship); alternatively, the terminal device may be deployed in air (e.g., on an airplane, on a balloon, or on a satellite).

In the embodiments of the present application, the terminal device may be a mobile phone, a pad, a computer with a wireless transceiver function, a virtual reality (VR) terminal device, an augmented reality (AR) terminal device, a wireless terminal device in industrial control, a wireless terminal device in self driving, a wireless terminal device in remote medical, a wireless terminal device in smart grid, a wireless terminal device in transportation safety, a wireless terminal device in smart city, a wireless terminal device in smart home, or the like.

As an example but not a limitation, in the embodiments of the present application, the terminal device may be a wearable device. The wearable device may be referred to as a wearable smart device, which is a general term for wearable devices developed by performing intelligent design on daily wear (such as glasses, gloves, a watch, clothing and shoes) using wearable technology. The wearable device is a portable device that is worn directly on a body, or integrated into a user's clothing or accessory. The wearable device is not merely a hardware device, and implements powerful functions through software support as well as data interaction and cloud interaction. Generalized wearable smart devices include devices (such as smart watches or smart glasses) that have full functionality and large-size, and may implement complete or partial functions without relying on smart phones, as well as devices (such as various smart bracelets or smart pieces of jewelry for monitoring physical signs) that only focus on a certain type of application functions and need to be used in conjunction with other devices (e.g., smart phones).

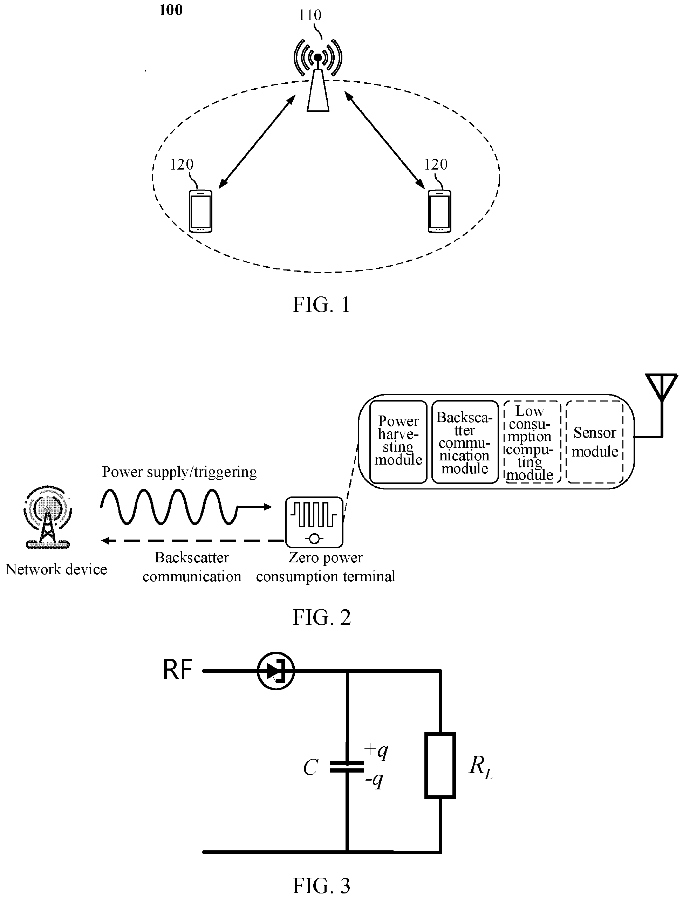

For example, a communication system 100 applied in the embodiments of the present application is shown in FIG. 1. The communication system 100 may include a network device 110, and the network device 110 may be a device that communicates with terminal devices 120 (also referred to as communication terminals or terminals). The network device 110 may provide communication coverage for a specific geographical area and may communicate with terminal devices located within the coverage.

FIG. 1 exemplarily shows a network device and two terminal devices. Optionally, the communication system 100 may include a plurality of network devices, another number of terminal devices may be included within the coverage of each network device, and the embodiments of the present application are not limited thereto.

Optionally, the communication system 100 may further include a network controller, a mobility management entity, and other network entities, which are not limited in the embodiments of the present application.

It should be understood that devices with communication functions in the network/system in the embodiments of the present application may be referred to as communication devices. Considering the communication system 100 shown in FIG. 1 as an example, the communication devices may include a network device 110 and terminal devices 120 with communication functions. The network device 110 and the terminal devices 120 may be the specific devices described above and will not be repeated here. The communication devices may further include other devices, such as a network controller, a mobility management entity, and other network entities, in the communication system 100, which are not limited in the embodiments of the present application.

It should be understood that the terms "system" and "network" are often used interchangeably herein. The term "and/or" herein is only a description of an association relationship of associated objects, and indicates that there may be three kinds of relationships. For example, "A and/or B" may represent three cases: A alone, both A and B, and B alone. In addition, a character "/" herein generally indicates that the associated objects before and after this character are in an "or" relationship.

It should be understood that "indicate" mentioned in embodiments of the present application may be a direct indication, an indirect indication, or an indication of an association relationship. For example, A indicating B may mean that A directly indicates B, for example, B may be acquired through A; alternatively, A indicating B may mean that A indirectly indicates B, for example, A indicates C, and B may be acquired through C; alternatively, A indicating B may mean that there is an association relationship between A and B.

In the description of the embodiments of the present application, the term "corresponding" may indicate a direct or indirect corresponding relationship between two items, or an association relationship between two items, or a relationship of indicating and being indicated, or a relationship of configuring and being configured, or the like.

In the embodiments of the present application, the term "predefined" may be achieved by pre-saving corresponding codes, tables or other methods that may be used to indicate relevant information in the devices (e.g., including the terminal device and the network device), and the specific implementation is not limited in the present application. For example, predefinition may refer to what is defined in a protocol.

In the embodiments of the present application, the term "protocol" may refer to a standard protocol in the field of communications, which may include, for example, an LTE protocol, an NR protocol, and related protocols applied in a future communication system, which will not be limited in the present application.

In order to facilitate the understanding of the technical solutions in the embodiments of the present application, the related art of the present application will be described.

### I. Zero power consumption communication

The key technologies of the zero power consumption communication include power harvesting, backscatter communication and low power consumption technology.

As shown in FIG. 2, a typical zero power consumption communication system (e.g., a radio frequency identification (RFID) system) includes a network device (e.g., a reader/writer of the RFID system) and a zero power consumption terminal (e.g., an electronic tag). The network device is used to transmit a wireless power supply signal and a downlink communication signal to the zero power consumption terminal, and receive a backscatter signal from the zero power consumption terminal. A basic zero power consumption terminal includes a power harvesting module, a backscatter communication module, and a low power consumption computing module. In addition, the zero power consumption terminal may further have a memory or a sensor for storing pieces of basic information (e.g., an object identification) or sensing data such as ambient temperature and ambient humidity.

For example, the power harvesting module may harvest power carried by radio waves (radio waves emitted by a network device shown in FIG. 2) in space to drive the low power consumption computing module of the zero power consumption terminal and realize backscatter communication. After acquiring power, the zero power consumption terminal may receive control commands from the network device and transmit data to the network device based on the control signaling by means of backscatter. The transmitted data may be data stored in the zero power consumption terminal itself (e.g., an identifier, or pre-written information such as a production date, a brand, or a manufacturer of a product). The zero power consumption terminal may also be loaded with various sensors, so as to report data collected by various sensors based on zero power consumption mechanism.

The key technologies of the zero power consumption communication will be described as follows.

### 1. Radio frequency power harvesting (RF Power Harvesting)

As shown in FIG. 3, a radio frequency power harvesting module harvests electromagnetic wave power in space based on a principle of electromagnetic induction, so as to obtain power required to drive the zero power consumption terminal for operation, for example, for driving a low power demodulation and modulation module, a sensor, and memory reading. Therefore, the zero power consumption terminal does not need a traditional battery.

2. Backscatter communication (Back Scattering)

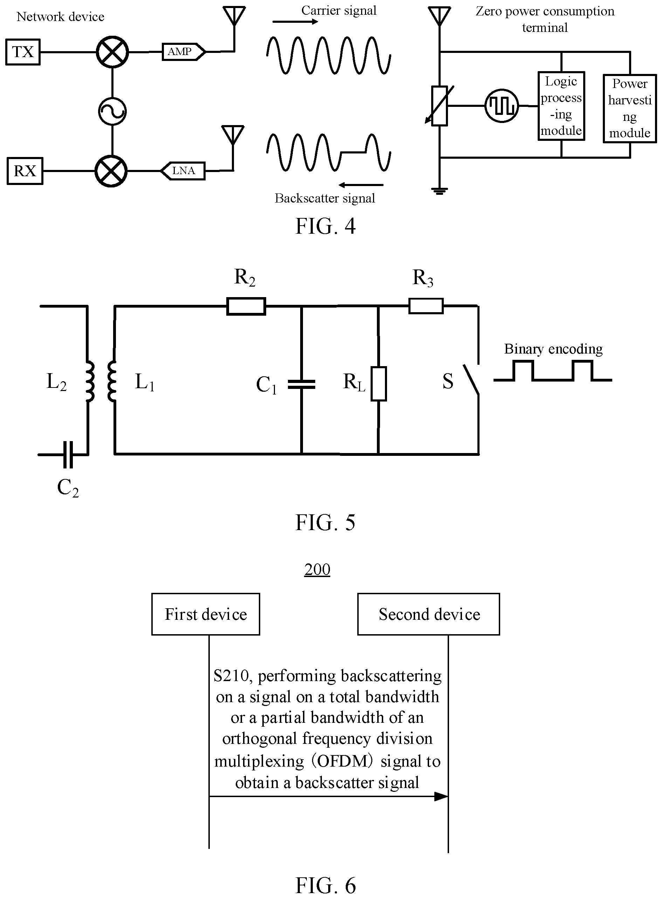

As shown in FIG. 4, the zero power consumption terminal receives a carrier signal transmitted by the network device, modulates the carrier signal, loads information that needs to be transmitted and radiates the modulated signal by an antenna. This information transmission process is referred to as backscatter communication. Backscatter and load modulation functions are inseparable. Load modulation adjusts and controls circuit parameters of an oscillation loop of the zero power consumption terminal according to a beat of data stream, so that the parameters, such as a magnitude of impedance, of the zero power consumption terminal change accordingly, thereby completing a modulation process. Load modulation technology mainly includes two manners, i.e., resistive load modulation and capacitive load modulation. For the resistive load modulation, a load is connected to a resistor in parallel, and the resistor is switched on or off based on a control of a binary data stream, as shown in FIG. 5. The on and off of the resistor will cause a circuit voltage to change, and thus an amplitude shift keying (ASK) modulation is achieved, that is, an amplitude of a backscatter signal of the zero power consumption terminal is adjusted to achieve modulation and transmission of the signal. Similarly, for the capacitive load modulation, the on or off of the capacitor will implement change of a resonant frequency of a circuit, and thus a frequency shift keying (FSK) modulation is achieved, that is, an operating frequency of a backscatter signal of the zero power consumption terminal is adjusted to achieve modulation and transmission of the signal.

It can be seen that the zero power consumption terminal performs information modulation on an incoming signal by means of load modulation, thereby implementing a backscatter communication process. Therefore, the zero power consumption terminal has significant advantages as that:
(1) the terminal does not actively transmit a signal, and thus a complex radio frequency link, such as a power amplifier (PA) or a radio frequency filter, is not required;
(2) the terminal does not need to actively generate a high-frequency signal, and thus a high-frequency crystal oscillator is not required; and
(3) signal transmission of the terminal does not need to consume its own power by means of backscatter communication.

### 3. Encoding technology

Data transmitted by a zero power consumption terminal may be represented as binary "1" and "0" by using different forms of codes. A radio frequency identification system usually uses one of the following encoding modes: reverse non-return-to-zero (NRZ) encoding, Manchester encoding, unipolar return-to-zero encoding, differential bi-phase (DBP) encoding, differential encoding, pulse interval encoding (PIE), bi-phase space encoding (FM0), Miller encoding, differential dynamic encoding, or the like. Generally speaking, different encoding technologies use different pulse signals to represent 0 and 1.

### Application scenarios of zero power consumption communication

Due to extremely low cost, zero power consumption, small size and other significant advantages, the zero power consumption communication may be widely used in various industries such as logistics for vertical industries, smart warehousing, smart agriculture, energy and electricity and industrial Internet; and it may also be applied to personal applications such as smart wearables and smart homes.

In some scenarios, based on power sources and usage manners of zero power consumption terminals, the zero power consumption terminals may be classified into the following types.

### 1. Passive zero power consumption terminal

The zero power consumption terminal (e.g., an electronic tag in an RFID system) does not need a built-in battery. When the zero power consumption terminal approaches a network device (e.g., a reader/writer of the RFID system), the zero power consumption terminal is within a near field formed by radiation of an antenna of the network device. Therefore, the antenna of the zero power consumption terminal generates an induced current through electromagnetic induction, and the induced current drives a low power consumption chip circuit of the zero power consumption terminal, so as to implement demodulation of a signal on a forward link, modulation of a signal on a backward link (or referred to as a backscatter link) and other operations. For a backscatter link, the zero power consumption terminal transmits a signal by means of backscatter.

It can be seen that the passive zero power consumption terminal does not need a built-in battery to drive either in a forward link or in a backward link, so that the passive zero power consumption terminal is a true zero power consumption terminal.

The passive zero power consumption terminal does not need a battery, and a radio frequency circuit and a baseband circuit are very simple, for example, a low-noise amplifier (LNA), a power amplifier (PA), a crystal oscillator, an analog-to-digital converter (ADC) and other devices are not needed. Therefore, the passive zero power consumption terminal has many advantages such as small size, light weight, low price, and long service life.

### 2. Semi-passive zero power consumption terminal

The semi-passive zero power consumption terminal itself does not have a conventional battery installed, but may harvest radio wave power by using an RF power harvesting module and store harvested power in a power storage unit (e.g., a capacitor). After obtaining the power, the power storage unit may drive a low power consumption chip circuit of the zero power consumption terminal to implement demodulation of a signal on a forward link, modulation of a signal on a backward link and other operations. For a backscatter link, the zero power consumption terminal transmits a signal by means of backscatter.

It can be seen that the semi-passive zero power consumption terminal does not need a built-in battery to drive either in a forward link or in a backward link. Although the power stored in the capacitor is used in operation, the power comes from the radio power harvested by the power harvesting module. Therefore, the semi-passive zero power consumption terminal is also a true zero power consumption terminal.

The semi-passive zero power consumption terminal inherits many advantages of the passive zero power consumption terminal, and thus the semi-passive zero power consumption terminal has many advantages such as small size, light weight, low price and long service life.

### 3. Active zero power consumption terminal

The zero power consumption terminal used in some scenarios may be an active zero power consumption terminal, and such a device may have a built-in battery. The battery is configured to drive a low power consumption chip circuit of the zero power consumption terminal to implement demodulation of a signal on a forward link, modulation of a signal on a backward link and other operations. However, for a backscatter link, the zero power consumption terminal transmits a signal by means of backscatter. Therefore, zero power consumption of such a device is mainly reflected in the fact that the signal transmission on the backward link does not need the power of the terminal itself, but uses a backscatter manner.

The active zero power consumption terminal, with a built-in battery to power the RFID chip, increases a reading and writing distance of the active zero power consumption terminal and improves the reliability of communication. Therefore, the active zero power consumption terminal may be applied in some scenarios with relatively high requirements on the communication distance, reading latency, or the like.

### II. Cellular Passive Internet of Things

With the increasing of applications in 5G industry, there are more and more types and application scenarios of connected objects, and there will be higher requirements for cost and power consumption of a communication terminal. An application of a battery-free and low-cost passive Internet of Things device becomes a key technology for a cellular Internet of Things, so as to enrich types and quantity of 5G network-linked terminals, thereby truly achieving Internet of Everything. A passive Internet of Things device may be based on a zero power consumption communication technology such as an RFID technology, and extend on this basis to be suitable for the cellular Internet of Things.

In order to facilitate the understanding of the embodiments of the present application, a power supply signal, a scheduling signal and a carrier signal related to zero power consumption communication will be described.

### 1. Power supply signal

The power supply signal is a power source for the zero power consumption terminal to harvest power.

In terms of a carrier of the power supply signal, the carrier may be a base station, a smart phone, a smart gateway, a charging station, a micro base station, or the like.

In terms of a frequency band, the frequency band of a radio wave configured to power supply may be a low frequency, a medium frequency, a high frequency, or the like.

In terms of a waveform, a radio wave configured to power supply may be a sine wave, a square wave, a triangle wave, a pulse, a rectangular wave, or the like.

In addition, the power supply signal may be a continuous wave or a discontinuous wave (i.e., within a certain period of interruption allowed).

Optionally, the power supply signal may be an existing signal in the 3GPP standard, such as a sounding reference signal (SRS), a physical uplink shared channel (PUSCH), a physical random access channel (PRACH), a physical uplink control channel (PUCCH), a physical downlink control channel (PDCCH), a physical downlink shared channel (PDSCH), a physical broadcast channel (PBCH), a WiFi signal or a Bluetooth signal.

Optionally, the power supply signal may also be implemented by adding a new signal, for example, adding a new signal dedicated to supply power.

### 2. Trigger signal or scheduling signal

A trigger signal is used to trigger or schedule a zero power consumption terminal to transmit data.

In terms of a carrier of the trigger signal, the carrier may be a base station, a smart phone, a smart gateway, or the like.

In terms of a frequency band, a radio wave configured to trigger or schedule may be a low frequency, a medium frequency, a high frequency, or the like.

In terms of a waveform, a radio wave configured to trigger or schedule may be a sine wave, a square wave, a triangle wave, a pulse, a rectangular wave, or the like.

In addition, the trigger signal may be a continuous wave or a discontinuous wave (i.e., within a certain period of interruption allowed).

Optionally, the trigger signal may be an existing signal in the 3GPP standard, such as SRS, PUSCH, PRACH, PUCCH, PDCCH, PDSCH, PBCH, a WiFi signal or a Bluetooth signal.

Optionally, the trigger signal may also be implemented by adding a new signal, for example, adding a new signal dedicated to triggering or scheduling.

### 3. Carrier signal

A carrier signal is used by a zero power consumption terminal to generate a backscatter signal. For example, the zero power consumption terminal may modulate a received carrier signal according to information that need to be transmitted to form a backscatter signal.

In terms of a carrier of the carrier signal, the carrier may be a base station, a smart phone, a smart gateway, or the like.

In terms of a frequency band, a radio wave used as the carrier signal may be a low frequency, a medium frequency, a high frequency, or the like.

In terms of a waveform, a radio wave used as the carrier signal may be a sine wave, a square wave, a triangle wave, a pulse, a rectangular wave, or the like.

In addition, the carrier signal may be a continuous wave or a discontinuous wave (i.e., within a certain period of interruption allowed).

Optionally, the carrier signal may be an existing signal in the 3GPP standard, such as SRS, PUSCH, PRACH, PUCCH, PDCCH, PDSCH, PBCH, a WiFi signal or a Bluetooth signal.

Optionally, the carrier signal may also be implemented by adding a new signal, for example, adding a new carrier signal dedicated to generating a backscatter signal.

It will be noted that, in the embodiments of the present application, the power supply signal, the scheduling signal and the carrier signal may be the same signal or may be different signals. For example, the power supply signal may be used as a carrier signal, and the scheduling signal may also be used as a carrier signal.

However, due to the low complexity of the zero power consumption terminal, the zero power consumption terminal only supports simple modulation methods such as amplitude shift keying (ASK), while a conventional terminal uses relatively complex modulation waveforms such as orthogonal frequency division multiplexing (OFDM). Therefore, when a large number of zero power consumption terminals are accessed to the system, how to achieve symbiotic communication between a zero power consumption terminal and a conventional terminal is an urgent problem to be solved.

To facilitate understanding of the technical solutions in the embodiments of the present application, the technical solutions of the present application will be described in detail below through specific embodiments. The above-related arts, as optional solutions, may be arbitrarily combined with the technical solutions in the embodiments of the present application, and those combined solutions all fall within the protection scope of the embodiments of the present application. The embodiments of the present application include at least part of the following contents.

FIG. 6 is a schematic diagram of a wireless communication method 200 in accordance with the embodiments of the present application. As shown in FIG. 6, the method 200 includes at least part of the following contents.

In S210, a first device performs backscattering on a signal on a total bandwidth or a partial bandwidth of an orthogonal frequency division multiplexing (OFDM) signal to obtain a backscatter signal.

In some embodiments, the first device is also referred to as a backscatter device or a backscattering device.

In some embodiments, a target receiving device of the backscatter signal may be a second device, and the second device may be a network device or a terminal device (e.g., a conventional terminal, or another backscatter device).

In the embodiments of the present application, the conventional terminal may refer to a terminal device that does not communicate through backscattering.

It should be understood that the first device may be any type of device capable of performing backscatter communication, which is not limited in the present application.

Case 1: the first device may be a zero power consumption terminal, such as an Internet of Things terminal, and as an example, an electronic tag.

Optionally, the zero power consumption terminal usually has relatively low complexity, and only supports a relatively narrow working bandwidth. Therefore, the bandwidth of the backscatter communication is also relatively narrow, for example, it may be 200 kHz or 1 MHz.

Optionally, the zero power consumption terminal may have some or all of the following structural units:
a low power consumption receiver and a backscatter transmitter.

In some embodiments, the low power consumption receiver may receive information transmitted by the network device or other nodes. The low power consumption receiver may have relatively low information processing capabilities, for example, only supporting narrowband and low speed information reception and processing.

In some embodiments, the backscatter transmitter supports transmission of information by means of backscatter. The backscatter transmitter cannot generate signals autonomously, and needs to modulate and reflect the received signal to carry information to be transmitted. For specific implementation, reference may be made to the relevant description of the aforementioned embodiments.

Case 2: the first device is a high capability terminal, in other words, a high-complexity terminal.

Optionally, the high capability terminal usually has relatively high complexity and supports a rather large working bandwidth. Therefore, a bandwidth of the backscatter communication is relatively large, for example, it may be 1 MHz or more.

In some embodiments, the first device may include some or all of the following structural units:
a main receiver, a low power consumption receiver, a backscatter transmitter and a main transmitter.

In some embodiments, the main receiver may receive information transmitted by the network device or other nodes. The main receiver may have strong information processing capabilities, for example, supporting large bandwidth (e.g., 100 MHz) and high speed (e.g., 1 Gbps) information reception and processing. For example, the main receiver may be an LTE terminal receiver, an NR terminal receiver, or other terminal receivers in future standard evolution.

In some embodiments, the low power consumption receiver may receive information transmitted by the network device or other nodes. The low power consumption receiver may have relatively low information processing capabilities, for example, only supporting narrowband and low speed information reception and processing. The low power consumption receiver may be used when receiving a small amount of information to save power consumption of the terminal.

In some embodiments, the backscatter transmitter supports the transmission of information by means of backscatter. The transmitter cannot generate signals autonomously, and needs to modulate and reflect the received signals, thereby carrying the information to be transmitted.

In some embodiments, the main transmitter may transmit information to the network device or other nodes. The main transmitter may have strong information processing capabilities, for example, supporting encoding, modulation and transmission of a broadband and high speed information. For example, the main transmitter may be an LTE terminal transmitter, an NR terminal transmitter, or other terminal receivers in future standard evolution.

In some scenarios, the first device may communicate with other devices by a main transmitter and a main receiver. In other scenarios, the first device may transmit signals using a backscatter transmitter to.

It should be understood that, in the embodiments of the present application, the first device communicating by means of backscatter may have the following beneficial effects.
1) It is beneficial to energy saving of the device. When transmitting backscatter, the device does not need to generate a radio frequency carrier signal, and only needs to modulate the incident carrier signal to transmit the signal. Therefore, the power consumption is very low, and energy saving of the device may be achieved using this method.
   For example, in a scenario where a device needs to save energy to extend the working time, or in a scenario where a device is in a low power state and needs to extend the stand-by time, the first device communicates by means of backscatter to achieve the purpose of saving energy.
2) Spectrum resources are saved. When the network device communicates with other devices, the first device may perform backscattering based on a signal in the communication process, so that additional information transmission is implemented while the communication process is in progress, and the additional information transmission multiplexes the spectrum resources of the communication process. Therefore, backscatter communication is beneficial to saving spectrum resources.
3) During the communication process, no matter whether the communication process is a downlink communication process, an uplink communication process or a side link (SL) communication process, the device may implement additional backscatter, that is, the first device may flexibly select the transmission opportunity of the backscatter communication. For example, in a downlink time slot, the first device may perform backscattering on a downlink signal transmitted by the base station to achieve uplink transmission, thereby implementing uplink transmission in the downlink time slot without configuring dedicated an uplink time slot for uplink transmissions. Therefore, the limitation of the traditional time slot configuration on transmission is broken through and more flexible transmission may be achieved.

It should be understood that the embodiments of the present application do not limit the transmission direction of the OFDM signal. For example, the OFDM signal may be a downlink signal, an uplink signal, or a side link signal. That is to say, the source of the carrier signal corresponding to the backscatter signal may be a downlink signal, an uplink signal, or a side link signal.

Considering an example where a transmitting device of the OFDM signal is a third device, the third device may be a network device, or may also be a terminal device, such as a conventional terminal.

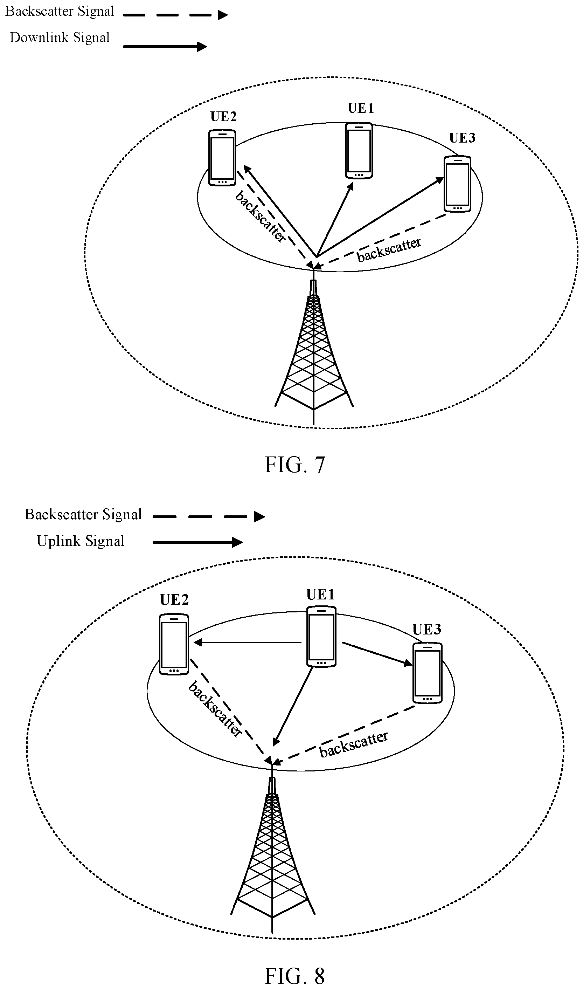

As shown in FIG. 7, the network device transmits a downlink (DL) signal to UE1, but UE2 and UE3 also receive the DL signal. Therefore, the UE2 and the UE3 may perform backscattering based on the DL signal, so that the backscatter signal is obtained to transmit uplink information.

As shown in FIG. 8, UE1 transmits an uplink (UL) signal to the network device, but UE2 and UE3 also receive the UL signal. Therefore, the UE2 and the UE3 may perform backscattering based on the UL signal, so that the backscatter signal is obtained to transmit uplink information.

In the embodiments of the present application, the OFDM signal is a broadband signal, and the bandwidth of the OFDM signal is not specifically limited in the present application.

Taking the NR system as an example, the bandwidth of the OFDM signal transmitted by the network device or the terminal device may reach 100 MHz in the FR1 frequency band, and the bandwidth of the OFDM signal transmitted by the network device or the terminal device may reach 400M Hz in the FR2 frequency band.

In the embodiments of the present application, the first device performs backscattering on a signal on a total bandwidth or a partial bandwidth of the OFDM signal to transmit a backscatter signal to the second device.

In some embodiments, the bandwidth used by the first device to perform backscattering on the OFDM signal may be determined based on the capability of the first device.

For example, in a case where the first device is a zero power consumption terminal in Case 1, the first device may perform backscattering on a signal on a partial bandwidth of the OFDM signal.

As another example, in a case where the first device is a high capability terminal in Case 2, the first device may perform backscattering on a signal on a total bandwidth or a partial bandwidth of the OFDM signal.

The following, combined with specific embodiments, describes the specific implementation that the first device performs backscattering on the OFDM signal to obtain the backscatter signal.

Embodiment 1: the first device performs backscattering on a signal, as a carrier signal, on a partial bandwidth of the OFDM signal to obtain a backscatter signal. That is, the first device may perform a single-carrier backscattering on a signal on a partial bandwidth of the wideband OFDM signal.

Optionally, this embodiment 1 may be applied to the type of the device in Case 1, or may be applied to the type of the device in Case 2.

Optionally, the partial bandwidth of the OFDM signal used by the first device does not exceed a maximum bandwidth supported by the first device.

For example, if the OFDM signal is 100 MHZ, and the maximum bandwidth that can be supported by the zero power consumption terminal in Case 1 is 200 KHz, then the first device may perform backscattering on a signal that does not exceed 200 KHz in the OFDM signal.

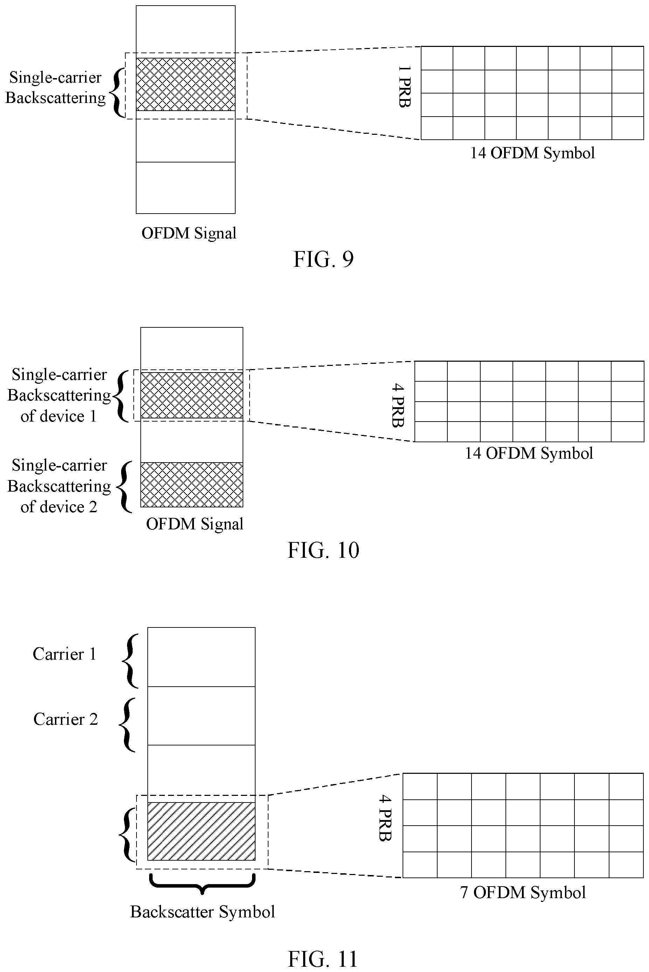

As an example, as shown in FIG. 9, when a subcarrier interval of the OFDM signal is 15 KHz, the first device may perform backscattering on a signal on a physical resource block (PRB) (e.g., a bandwidth is 180 KHz) of the OFDM signal.

As another example, if the OFDM signal is 100 MHz, for the high capability terminal in Case 2, the first device may perform backscattering on a signal on 1 MHz or 1 PRB of the OFDM signal.

In some embodiments, different backscatter devices may perform backscattering on signals on different frequency parts of the OFDM signal.

For example, different backscatter devices may perform backscattering on signals on different PRBs of the OFDM signal.

As an example, as shown in FIG. 10, the device 1 and the device 2 may perform backscattering on signals on different frequency parts of the OFDM signal.

Embodiment 2: the first device performs backscattering on the OFDM signal as a carrier signal to obtain a backscatter signal. That is, the first device may perform a single-carrier backscattering on the wideband OFDM signal. That is, the first device may perform a single-carrier backscattering on a signal on a total bandwidth of the wideband OFDM signal. By performing backscattering on the bandwidth OFDM signal as a whole carrier signal, the backscatter signal is carried on the whole OFDM signal. That is, a time domain symbol of a backscatter signal may be carried on the broadband backscatter signal, which is conducive to improving the transmission performance of the backscatter.

Optionally, this embodiment 2 may be applied to the type of the device in Case 2.

Embodiment 3: the first device takes the OFDM signal as multiple carrier signals and performs backscattering on the multiple carrier signals respectively to obtain the backscatter signal, where each carrier signal includes a signal on a partial bandwidth of the OFDM signal. That is, the first device may perform multi-carrier backscatter on the wideband OFDM signal.

Optionally, this embodiment 3 may be applied to the type of the device in Case 2.

In some embodiments, bandwidths occupied by the multiple carrier signals do not overlap with each other.

As shown in FIG. 11, the first device may classify the OFDM signal into n carrier signals, and the first device may perform backscattering on each carrier signal to obtain a corresponding backscatter signal.

Optionally, when the first device performs backscattering on each carrier signal, each carrier signal may be modulated to carry different information bits.

As an example, if the bandwidth of the OFDM signal is 200 PRBs (a subcarrier interval is 15 KHz), the first device may classify the OFDM signal into 50 carriers, that is, every 4 PRBs is classified as a carrier signal. When backscattering is performed on each carrier signal, each carrier signal may be modulated to carry different information bits. For example, in this example, the first device may carry a maximum of 50 bits when performing backscattering on the OFDM signal including 200 PRBs, where each carrier signal is modulated to carry one bit.

The embodiments of the present application limit neither the bandwidth occupied by each carrier signal of the multiple carrier signals, nor the number of the multiple carrier signals. For example, it may be determined according to the number of information bits to be transmitted by the first device. As an example, if the OFDM signal is 100 MHz and the number of information bits to be transmitted by the first device is 50, the first device may classify the OFDM signal into 50 carrier signals, and each carrier signal occupies 2 MHz.

The present application does not limit the specific implementation that the first device performs a separate backscattering operation on each carrier signal, thereby carrying independent information bits on different carrier signals.

As an implementation, the first device includes a plurality of backscatter communication modules, and the plurality of backscatter communication modules are configured to perform backscattering on multiple carrier signals respectively, where each backscatter communication module corresponds to a carrier signal.

That is, backscattering on different frequency parts of the OFDM signal may be performed by independent backscatter communication modules.

For example, in the above example, the wideband OFDM signal is classified into 50 carrier signals, backscattering may be performed on each carrier signal by an independent backscatter communication module in the first device.

Therefore, the embodiments of the present application may achieve the transmission of multiple information bits at the same time (e.g., the same backscatter symbol) by means of multi-carrier backscatter, for example, as long as the bandwidth of OFDM is wide enough, a sufficient number of carrier signals may be divided, so that backscattering may also transmit dozens to hundreds of bits on the same time domain symbol. Thus, the communication rate of backscattering communication may be improved.

The time domain characteristics and frequency domain characteristics of the backscatter signal are illustrated below in combination with the specific embodiments.

For ease of distinction and explanation, in the embodiments of the present application, a unit of the backscatter signal in the time domain is recorded as a backscatter symbol, a unit of the backscatter signal in the frequency domain is recorded as a backscatter frequency domain unit, and a minimum time-frequency unit of the backscatter signal is recorded as a backscatter time-frequency unit. A unit of the OFDM signal in the time domain is an OFDM symbol, and a unit of the OFDM signal in the frequency domain is a PRB.

It should be understood that the embodiments of the present application may be applied to a communication system that introduces a backscatter device. In this case, the communication system may be considered to include a main system and a slave system, where the main system may be composed of conventional terminal(s) and network device(s) in the communication system, such as the terminal devices and the network device in the communication system shown in FIG. 1, and the slave system may be composed of backscatter device(s) and target receiving device(s) for backscatter communication (e.g., a network device, or a conventional terminal, or another backscatter device).

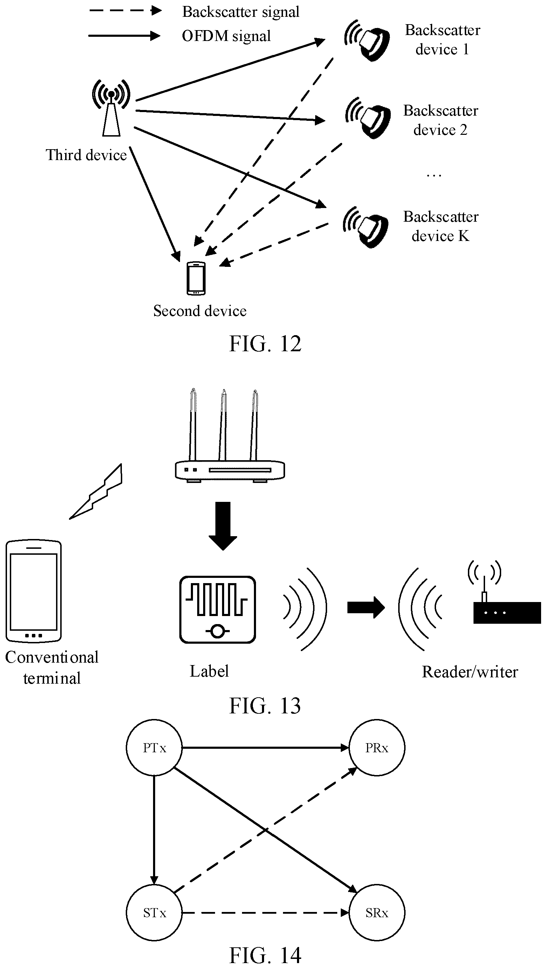

FIG. 12 is a schematic diagram of a system model applicable to embodiments of the present application. As shown in FIG. 12, the third device may transmit the OFDM signal to the second device, and the backscatter device may perform backscatter communication using the OFDM signal, for example, transmit a backscatter signal to the second device. The main system may include the third device and the second device, and the slave system may include the backscatter device and the second device.

In some embodiments, the third device may be a network device or a conventional terminal.

In some embodiments, the second device may be a conventional terminal or a network device.

That is, the transmitting device (i.e., the third device) of the carrier signal of the backscatter signal may be a network device or a conventional terminal, and the target receiving device (i.e., the second device) of the backscatter signal may be a conventional terminal or a network device.

In some scenarios, the third device may be a network device, and the second device may be a conventional terminal.

In some other scenarios, the third device may be a first terminal, and the second device may be a second terminal.

In some other scenarios, the third device is a conventional terminal, and the second device is a network device.

It should be understood that in the embodiments of the present application, the target receiving device of the carrier signal of the backscatter signal may be the second device or may be the first device, which is not limited in the present application.

FIG. 13 is a schematic diagram of an environmental backscatter system model applicable to embodiments of the present application. In a typical environmental backscatter communication system, a backscatter device (e.g., an electronic tag) may achieve backscatter communication using radio waves in space. As shown in FIG. 13, a main system composed of a router and a conventional terminal is communicating, and a backscatter device performs backscatter modulation on a downlink signal transmitted by the router, so that the information that needs to be transmitted by the backscatter device itself can be transmitted to the reader/writer. The backscatter device and the reader/writer form a slave system supported by backscatter communication technology.

In the above system model, since the slave system and the main system use the same spectrum, the communication of the slave system may interfere with the communication link of the main system, that is, the backscatter signal of the backscatter device may be mixed with the main system signal to interfere with the main system receiver. In this case, although the slave system using backscatter benefits, data transmission of the main system may be lossy.

In view of this, the concept of symbiotic communication is proposed. The symbiotic communication, based on backscattering and through the good coordination between the master and slave systems, not only eliminates the interference of the backscatter signal generated by the slave system to the main system, but also converts the backscatter signal into a signal that is beneficial to the main system.

In some embodiments, the symbiotic communication between the master and slave systems is achieved by constraining a chip width of the backscatter signal and a chip width of the OFDM signal to satisfy a K-fold relationship, where K is greater than 1.

That is, a symbol length of a backscatter symbol is a symbol length of K OFDM symbols.

In some embodiments, a backscatter symbol and K OFDM symbols are aligned in a time domain.

In some embodiments, a backscatter symbol and K OFDM symbols being aligned in the time domain may refer to that:
a starting point of a backscatter symbol is aligned with a starting point of the K OFDM symbols, and an end point of the backscatter symbol is aligned with an end point of the K OFDM symbols.

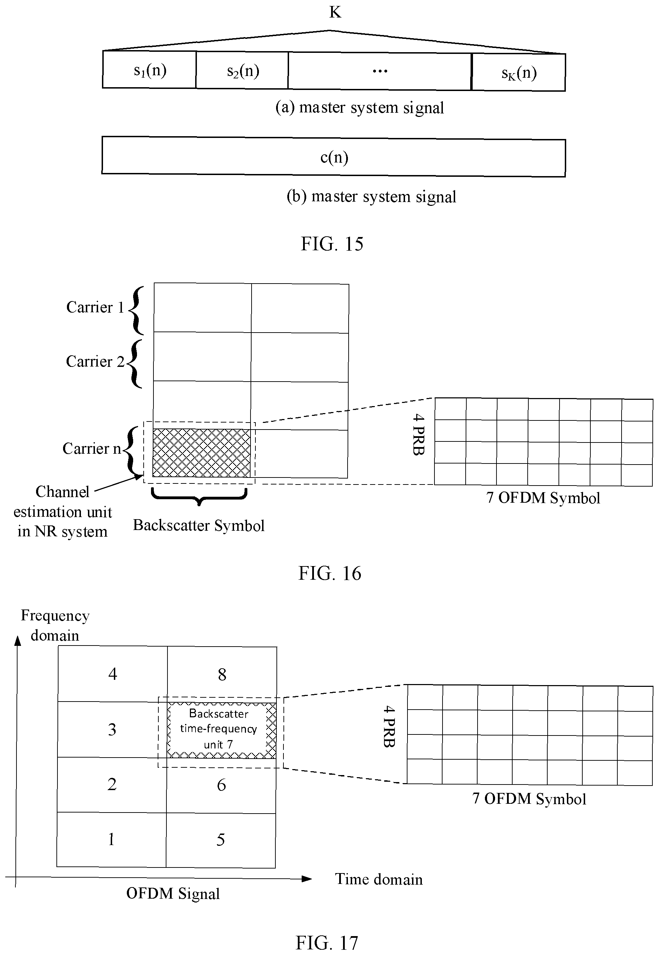

In the symbiotic communication system model shown in FIG. 14, a main transmitter PTx and a main receiver PRx constitute a main system, and a slave transmitter STx and a slave receiver SRx constitute a slave system. STx implements backscatter modulation with the help of the signal transmitted by PTx. As shown in FIG. 15, a chip width Cp of the backscatter signal of the slave system and a chip width Cs of the signal of the main system satisfy the K-fold relationship, that is, Cp=K*Cs. Therefore, the backscatter signal does not change in the time domain corresponding to the K main system chips. As a result, when the main system performs coherent demodulation in a unit of K chips, the backscatter signal of the slave system is equivalent to a multipath signal mixed into the main received signal of the main system. Therefore, through such constraints, the slave system not only has no interference to the main system, but improves the performance of the main system by providing the multipath signal, while completing backscattering to achieve the self-communication relying on the signal of the main system. Since the subtle relationship between the master and slave systems is similar to the symbiotic relationship in biology, the above communication system model is named the symbiotic communication model.

The symbiotic communication not only solves the wireless power supply problem of zero power communication, but also solves the spectrum problem of zero power communication, so that the zero power communication may share the spectrum of traditional communication and coexist well with traditional communication on the same spectrum. Therefore, the symbiotic communication is expected to become an important way to realize zero power communication.

In some embodiments, a symbol length of a backscatter symbol is a minimum unit for a target receiving device of the OFDM signal to perform channel estimation in a time domain when receiving the OFDM signal for example, half a time slot or one time slot.

For example, when the main system receiver receives the OFDM signal, the minimum unit for channel estimation in the time domain is K OFDM symbols, and a symbol length of a backscatter symbol may be an integer multiple of K OFDM symbols.

As shown in FIG. 16, in the NR system, the minimum unit for channel estimation in the time domain when the terminal device receives the OFDM signal is 7 OFDM symbols, then a symbol length of a backscatter symbol may be 7 OFDM symbols, or an integer multiple of 7 OFDM symbols.

In some embodiments, K may be configured by a target receiving device of the backscatter signal, or may be predefined.

In some embodiments, a size of a backscatter frequency domain unit is equal to a size of M PRBs, where M is a positive integer.

In some embodiments, M may be configured by a target receiving device of the backscatter signal, or may be predefined.

In some embodiments, a backscatter frequency domain unit and M PRBs are aligned in the frequency domain.

In some embodiments, a backscatter frequency domain unit and M PRBs being aligned in the frequency domain may refer to that:
a start point of a backscatter frequency domain unit is aligned with a start point of the M PRBs, and an end point of the backscatter frequency domain unit is aligned with an end point of the M PRBs.

In some embodiments, the minimum bandwidth of the carrier signal used by the first device for backscattering is the minimum unit for a target receiving device of the OFDM signal to perform channel estimation in the frequency domain when receiving the OFDM signal.

For example, when the main system receiver receives the OFDM signal, the minimum unit for channel estimation in the frequency domain is M PRBs, and a size of a backscatter frequency domain unit may be an integer multiple of M PRBs, in other words, a minimum bandwidth of a carrier signal may be an integer multiple of M PRBs.

As shown in FIG. 16, in the NR system, the minimum unit for channel estimation in the frequency domain when the terminal device receives the OFDM signal is 4 PRBs, and a size of a backscatter frequency domain unit may be 4 PRBs, or an integer multiple of 4 PRBs.

In some embodiments, a backscatter time-frequency unit consists of a backscatter symbol and a backscatter frequency domain unit, a symbol length of a backscatter symbol is equal to a symbol length of K OFDM symbols, and a size of a backscatter frequency domain unit is equal to M PRBs. That is, the backscatter communication is performed on a minimum time-frequency unit consisting of K OFDM symbols and M PRBs of the OFDM signal sent by the main system.

In some embodiments, the first device may modulate the OFDM signal on a backscatter time-frequency unit base on backscatter, thereby transmitting a bit "0" and a bit "1".

If a bit "0" is transmitted when backscattering is performed on the OFDM signal, for example, it may be a state where no backscattering is performed on the OFDM signal. In this case, for the main system receiver, the received signal is the OFDM signal transmitted only by the main system transmitter. Therefore, the backscatter device does not introduce interference.

If a bit "1" is transmitted when backscattering is performed on the OFDM signal of the main system, for example, it may be a state where backscattering is performed on the OFDM signal of the main system, or a state where high level backscattering is performed on the OFDM signal of the main system. In this case, for the main system receiver, the received signal is the OFDM signal transmitted by the main system transmitter and the backscatter signal. In this case, the backscatter device has a backscatter signal, but the backscatter signal is modulated as a whole in the minimum unit for channel estimation of the main system receiver. That is, the backscattering signal is obtained by performing the same overall backscattering on all OFDM symbols of the main system in the minimum unit for channel estimation. Therefore, the backscatter signal is equivalent to a multipath. Since there is also a pilot signal on the minimum unit for channel estimation, the channel changes caused by this multipath may be estimated by the channel estimator of the receiver. This multipath not only does not cause interference, but forms a useful signal component.

It can be seen that regardless of which of the above situations, as long as the aforementioned restricted relationship between the time domain and frequency domain are met, the backscatter signal of the backscatter device will not cause interference to the main system.

In some embodiments of the present application, the backscatter device may process signals on part or all of the bandwidth of the OFDM signal to carry original information bits to form at least one data symbol. The above-mentioned processing may, for example, include, but is not limited to, encoding, scrambling, modulation, or the like.

In some embodiments, the at least one data symbol may be mapped to at least one backscatter time-frequency unit for transmission.

In some embodiments, a data symbol may be mapped to a backscatter time-frequency unit for transmission.

In some embodiments, a data symbol may carry 1 bit of information or multiple bits of information. For example, if the backscatter signal is generated by on-off keying (OOK) modulation (or amplitude shift keying (ASK), or frequency shift keying (FSK)), a data symbol may carry 1 bit of information. Alternatively, if the backscatter signal is generated by a high-order modulation such as quad-phase shift keying (QPSK) modulation, a data symbol may carry 2 bits of information.

In some embodiments, in a case where the information to be transmitted by the backscatter device is 1 bit (e.g., a scenario of transmitting acknowledgement (ACK)/negative acknowledgement (NACK)), the backscatter device may map the 1 bit of information to a backscatter time-frequency unit using a single-carrier backscatter mode, for example, the single-carrier backscatter mode in Embodiment 1 or Embodiment 2.

In other embodiments, the backscatter device needs to transmit multiple information bits such as dozens or even hundreds of bits. The backscatter device may map the multiple bits of information to a plurality of backscatter time-frequency units using a multi-carrier backscatter mode, for example, the multi-carrier backscatter mode in Embodiment 3. In these cases, resource mapping of information bits needs to be considered.

In some embodiments of the present application, the backscatter device may map the at least one data symbol onto at least one backscatter time-frequency unit in the time domain and/or frequency domain. Each backscatter time-frequency unit is composed of a backscatter symbol and a backscatter frequency domain unit. The method for determining the resources occupied by the backscatter signal in the time domain and the frequency domain will be described in detail below.

In some embodiments, for the case of the aforementioned single-carrier backscatter, a backscatter frequency domain unit may be formed in the frequency domain. Furthermore, the backscatter frequency domain unit and one or more backscatter symbols occupied by the backscatter signal in the time domain constitute one or more backscatter time-frequency units for data symbol mapping.

In other embodiments, for the case of the aforementioned multi-carrier backscatter, a plurality of backscatter frequency domain units may be formed in the frequency domain. Furthermore, the plurality of backscatter frequency domain units and one or more backscatter symbols occupied by the backscatter signal in the time domain constitute a plurality of backscatter time-frequency units for data symbol mapping.

In some embodiments, the first device maps the at least one data symbol onto the at least one backscatter time-frequency unit in sequence in an order of time domain first and frequency domain later.

In some embodiments, the first device maps the at least one data symbol onto the at least one backscatter time-frequency unit in sequence in an order of frequency domain first and time domain later.

In some embodiments, when mapping the at least one data symbol in a time domain order, the first device may map the at least one data symbol onto the at least one backscatter time-frequency unit in sequence in an ascending order or a descending order of numbering of the at least one backscatter time-frequency unit in the time domain. In other words, the at least one data symbol is mapped onto the at least one backscatter time-frequency unit in sequence in an order of the at least one backscatter time-frequency unit in the time domain from first to last or from last to first.

In some embodiments, when mapping the at least one data symbol in a frequency domain order, the first device may map the at least one data symbol onto the at least one backscatter time-frequency unit in sequence in an ascending order or a descending order of numbering of the at least one backscatter time-frequency unit in the frequency domain. In other words, the at least one data symbol is mapped onto the at least one backscatter time-frequency unit in sequence in an order of the at least one backscatter time-frequency unit in the frequency domain from low to high or from high to low.

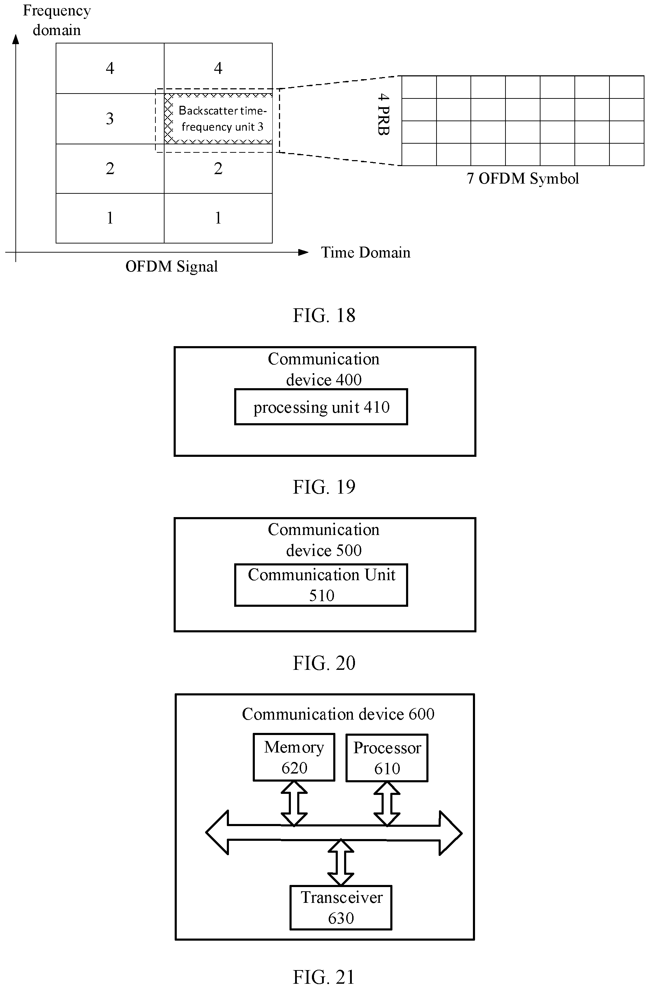

It should be understood that in the embodiments of the present application, the present application does not limit the numbering method of the at least one backscatter time-frequency unit. For example, the at least one backscatter time-frequency unit may be numbered separately in the time domain and the frequency domain (as shown in FIG. 18), or may be jointly numbered in the time domain and the frequency domain (as shown in FIG. 17). The present application does not limit this.

For example, as shown in FIG. 17, the at least one backscatter time-frequency unit includes 8 backscatter time-frequency units, and the 8 backscatter time-frequency units may be numbered in sequence from small to large in the time domain and from low to high in the frequency domain.

For example, as shown in FIG. 18, the at least one backscatter time-frequency unit includes 8 backscatter time-frequency units, which may be independently numbered in sequence from low to high in the frequency domain on each backscatter time-domain symbol.

It should be noted that the present application is illustrated only by taking an example where a backscatter symbol is 7 OFDM symbols (i.e., K=7) and a backscatter frequency domain unit is 4 PRBs (i.e., M=4). A backscatter symbol may alternatively be other numbers of OFDM symbols and a backscatter frequency domain unit may alternatively be other numbers of PRBs. The present application is not limited thereto.

The following combined with specific implementation, explain the backscatter data symbol resource mapping modes.

Mode 1: the at least one data symbol is mapped onto at least one backscatter time-frequency unit in sequence according to a time order of the backscatter time-frequency unit(s). In this Mode 1, the backscatter device performs resource mapping on the data symbol(s) only in the time domain. That is to say, the at least one backscatter time-frequency unit corresponds to the same backscatter frequency domain unit.

For example, for the case of single-carrier backscatter, since at most one data symbol is carried in the frequency domain, the data symbol may be mapped in the time domain.

In some embodiments, the backscatter device may number at least one backscatter time-frequency unit in the time domain in sequence in a time order, and further map the at least one data symbol onto the at least one backscatter time-frequency unit in sequence in the descending order or ascending order of the numbering of the at least one backscatter time-frequency unit.

Mode 2: the at least one data symbol is mapped onto at least one backscatter time-frequency unit in sequence according to a frequency order of the backscatter time-frequency unit(s). In this Mode 2, the backscatter device performs resource mapping on the data symbol(s) only in the frequency domain. That is to say, the at least one backscatter time-frequency unit corresponds to the same backscatter symbol.

Optionally, this Mode 2 may be applicable to the following scenario: the at least one data symbol includes a plurality of data symbols, the at least one backscatter time-frequency unit includes a plurality of backscatter time-frequency units, the plurality of backscatter time-frequency units are located on a backscatter symbol, and the plurality of backscatter time-frequency units are sufficient to transmit the plurality of data symbols.

In some embodiments, for the case of multi-carrier backscatter, a plurality of backscatter frequency domain units may be formed in the frequency domain, so the data symbols may be mapped in the frequency domain. For example, the plurality of backscatter time-frequency units are numbered in sequence in an frequency order from low to high, and the at least one data symbol is mapped onto the at least one backscatter time-frequency unit in sequence in the descending order or ascending order of the numbering of the at least one backscatter time-frequency unit.

Mode 3: the at least one data symbol is mapped onto at least one backscatter time-frequency unit in sequence in an order of the time domain first and the frequency domain later.

Optionally, in a case where the backscatter device needs to transmit a relatively large number of information bits, the backscatter device may map data symbols in the time domain and the frequency domain simultaneously.

For example, the at least one backscatter time-frequency unit is numbered in sequence from low to high in frequency and then from first to late in time domain, and the at least one data symbol is mapped onto the at least one backscatter time-frequency unit in sequence in the descending order or ascending order of the numbering of the at least one backscatter time-frequency unit.

Mode 4: the at least one data symbol is mapped onto at least one backscatter time-frequency unit in sequence in an order of the frequency domain first and the time domain later.

Optionally, in a case where the backscatter device needs to transmit a relatively large number of information bits, the backscatter device may map data symbols in the time domain and the frequency domain simultaneously.

For example, the at least one backscatter time-frequency unit is numbered in sequence from first to last in the time domain and then from low to high in frequency, and the at least one data symbol is mapped onto the at least one backscatter time-frequency unit in sequence in the descending order or ascending order of the numbering of the at least one backscatter time-frequency unit.

In some embodiments of the present application, the method 200 further includes the following contents.

The first device performs backscattering on a signal on a partial bandwidth of the OFDM signal according to first configuration information to obtain a backscatter signal, where the first configuration information is used to configure a resource location of a carrier signal used to perform backscattering and/or a resource location of a backscatter signal.

That is, the first configuration information may configure the backscatter device to use signals at which positions of the broadband OFDM signal as carrier signals, and/or to transmit backscatter signals at which resource positions.

In some embodiments, the first configuration information includes at least one of the following:
frequency information used by the first device to perform backscattering on the OFDM signal, time information used by the first device to transmit the backscatter signal, or frequency information used by the first device to transmit the backscattered signal.

In some embodiments, the frequency information used by the first device to perform backscattering on the OFDM signal and the frequency information used by the first device to transmit the backscatter signal may have a fixed offset.

In some embodiments, the frequency information used by the first device to perform backscattering on the OFDM signal may be used to determine which frequency parts of the OFDM signal the first device uses for backscattering.

In some embodiments, the time information used by the first device to transmit the backscatter signal may be used to determine the time domain unit occupied by the backscatter signal.

In some embodiments, the frequency information used by the first device to transmit the backscatter signal may be used to determine the frequency unit occupied by the backscatter signal.

In some embodiments, the frequency information used by the first device to perform backscattering on the OFDM signal may include:
start frequency information at which the first device performs backscattering on the OFDM signal and/or a frequency band length information used by the first device to perform backscattering on the OFDM signal.

Optionally, the frequency information used by the first device to perform backscattering on the OFDM signal is represented by a frequency domain unit (e.g., PRB) of the OFDM signal, or is represented by a frequency domain unit (e.g., M PRBs) of the backscatter signal.

For example, the frequency information used by the first device to perform backscattering on the OFDM signal may include:
starting PRB information for the first device to perform backscattering on the OFDM signal and/or information of the number of the used PRBs; or
starting backscatter frequency domain unit information for the first device to perform backscattering on the OFDM signal and/or information of the number of backscatter frequency domain units used.

In some embodiments, the time information used by the first device to transmit the backscatter signal includes at least one of the following:
start time information, duration information or occupied time unit information for the first device to transmit the backscatter signal.

Optionally, the time information used by the first device to transmit the backscatter signal is represented by a time domain unit (e.g., a time slot, the OFDM symbol) of the OFDM signal, or is represented by a time domain unit (e.g., a backscatter symbol) of a backscatter signal.

For example, the time information used by the first device to transmit the backscatter signal may include:
a starting OFDM symbol (or a starting time slot) for the first device to transmit a backscatter signal, and the OFDM number or time slot number in which it is located.

In some embodiments, the frequency information used by the first device to transmit the backscatter signal may include:
starting frequency information for the first device to transmit the backscatter signal and/or frequency band length information used by the first device to transmit the backscatter signal.

Optionally, the frequency information used by the first device to transmit the backscatter signal is represented by a frequency domain unit (e.g., PRB) of the OFDM signal, or is represented by a frequency domain unit (e.g., M PRBs) of a backscatter signal.

For example, the frequency information used by the first device to transmit the backscatter signal may include:
starting PRB information for the first device to transmit the backscatter signal and/or information of the number of the PRBs used; or
starting backscatter frequency domain unit information for the first device to transmit the backscatter signal and/or information of the number of backscatter frequency domain units used.

In some embodiments, at least one backscatter time-frequency unit for the first device to perform resource mapping may be determined according to the first configuration information.

In some embodiments, the first configuration information is configured by a target receiving device of the backscatter signal.

In some embodiments, the first configuration information is predefined.

In summary, in the embodiments of the present application, the backscatter device may use the signal on a partial bandwidth or a total bandwidth of the OFDM signal for backscattering, thereby achieving symbiotic communication between the backscatter device and the conventional terminal.

In some embodiments, for a zero power consumption terminal, backscattering may be performed on a signal on a partial bandwidth of the OFDM signal.

In some other embodiments, for a high capability terminal supporting backscattering, backscattering may be performed on a signal on a partial bandwidth or a total bandwidth of the OFDM signal. For example, the OFDM signal may be used to perform single-carrier backscattering, alternatively, the OFDM signal may be used to perform multi-carrier backscatter.

Furthermore, a symbol length occupied by the backscatter signal in the time domain and a symbol length occupied by the OFDM symbol in the time domain are constrained to satisfy a K-fold relationship, so that the backscatter signal is equivalent to a multipath of the OFDM signal.

Furthermore, a symbol length of a backscatter symbol is constrained to be the minimum unit for a target receiving device of the OFDM signal to perform channel estimation in the time domain when receiving the OFDM signal, and a minimum bandwidth of a carrier signal used by the first device for backscattering is constrained to be the minimum unit for a target receiving device of the OFDM signal to perform channel estimation in the frequency domain when receiving the OFDM signal. Since there is also a pilot signal on the minimum unit for channel estimation, the channel changes caused by the backscatter signal as a multipath not only does not cause interference when estimated by the channel estimator of the receiver, but forms a useful signal component.

Furthermore, the backscatter device may map the backscatter data symbol(s) to at least one backscatter time-frequency unit. For example, the backscatter data symbol(s) are mapped to at least one backscatter time-frequency unit by means of the time domain first and the frequency domain later, or the frequency domain first and the time domain later.

In combination with FIGS. 6 to 18, the method embodiments of the present application are described in detail above, and the device embodiments of the present application will be described in detail below in combination with FIGS. 19 to 24. It should be understood that the device embodiments and the method embodiments correspond to each other, and similar descriptions may refer to the method embodiments.

FIG. 19 shows a schematic block diagram of a communication device 400 in accordance with embodiments of the present application. As shown in FIG. 19, the communication device 400 includes:
a processing unit 410 configured to perform backscattering on a signal on a total bandwidth or a partial bandwidth of an orthogonal frequency division multiplexing (OFDM) signal to obtain a backscatter signal.

In some embodiments, the backscatter signal is obtained by the communication device 400 performing backscattering on the OFDM signal as a carrier signal.

In some embodiments, the backscatter signal is obtained by the communication device 400 taking the OFDM signal as multiple carrier signals and performing backscattering on the multiple carrier signals respectively, where each carrier signal includes a signal on a partial bandwidth of the OFDM signal.

In some embodiments, the bandwidths occupied by the multiple carrier signals do not overlap with each other.

In some embodiments, the communication device 400 includes a plurality of backscatter communication modules, and the plurality of backscatter communication modules are configured to perform backscattering on the plurality of carrier signals respectively.

In some embodiments, the backscatter signal is obtained by the communication device 400 performing backscattering on a signal, as a carrier signal, on a partial bandwidth of the OFDM signal.

In some embodiments, a unit of the backscatter signal in a time domain is a backscatter symbol, and a unit of the OFDM signal in a time domain is an OFDM symbol. A symbol length of a backscatter symbol is a symbol length of K OFDM symbols, where K is greater than 1.

In some embodiments, K is configured by a target receiving device of the backscatter signal, alternatively, K is predefined.

In some embodiments, a symbol length of a backscatter symbol is a minimum unit for a target receiving device of the OFDM signal to perform channel estimation in the time domain when receiving the OFDM signal.

In some embodiments, a backscatter symbol and K OFDM symbols are aligned in the time domain.

In some embodiments, a unit of the backscatter signal in the frequency domain is a backscatter frequency domain unit, and a unit of the OFDM signal in the frequency domain is a physical resource block (PRB). A size of a backscatter frequency domain unit is a size of M PRBs, where M is a positive integer.

In some embodiments, a backscatter frequency domain unit and M PRBs are aligned in a frequency domain.

In some embodiments, a minimum bandwidth of a carrier signal used by the communication device 400 for backscattering is a minimum unit for the target receiving device of the OFDM signal to perform channel estimation in the frequency domain when receiving the OFDM signal.

In some embodiments, the backscatter signal includes at least one data symbol, and the processing unit 410 is further configured to:
map the at least one data symbol onto at least one backscatter time-frequency unit in the time domain and/or frequency domain, where each backscatter time-frequency unit is composed of a backscatter symbol and a backscatter frequency domain unit.

In some embodiments, the processing unit 410 is further configured to:
map the at least one data symbol onto at least one backscatter time-frequency unit in sequence in an order of time domain first and frequency domain later.

In some embodiments, the processing unit 410 is further configured to:
map the at least one data symbol onto at least one backscatter time-frequency unit in sequence in an order of frequency domain first and time domain later.

In some embodiments, the processing unit 410 is further configured to:
when mapping the at least one data symbol in a time domain order, map the at least one data symbol onto the at least one backscatter time-frequency unit in sequence in an ascending order or a descending order of numbering of the at least one backscatter time-frequency unit in the time domain.

In some embodiments, the processing unit 410 is further configured to: when mapping the at least one data symbol in a frequency domain order, map the at least one data symbol onto the at least one backscatter time-frequency unit in sequence in an ascending order or a descending order of numbering of the at least one backscatter time-frequency unit in the frequency domain.

In some embodiments, the processing unit 410 is further configured to:
perform backscattering on a signal on a partial bandwidth of the OFDM signal according to first configuration information to obtain a backscatter signal, where the first configuration information is used to configure a resource location of a carrier signal used to perform backscattering and/or a resource location of a backscatter signal.

In some embodiments, the first configuration information includes at least one of the following:
frequency information used by the communication device 400 to perform backscattering on the OFDM signal, time information used by the communication device 400 to transmit the backscatter signal, or frequency information used by the communication device 400 to transmit the backscattered signal.

In some embodiments, the time information used by the communication device 400 to transmit the backscatter signal includes at least one of the following: start time information, duration information, or occupied time unit information for the first device to transmit the backscatter signal.

In some embodiments, the frequency information used by the communication device 400 to perform backscattering on the OFDM signal is represented by a frequency domain unit of the OFDM signal, or is represented by a frequency domain unit of the backscatter signal.

In some embodiments, the time information used by the communication device 400 to transmit the backscatter signal is represented by a time domain unit of the OFDM signal, or is represented by a time domain unit of the backscatter signal.

In some embodiments, the frequency information used by the communication device 400 to transmit the backscatter signal is represented by a frequency domain unit of the OFDM signal, or is represented by a frequency domain unit of the backscatter signal.

In some embodiments, the first configuration information is configured by a target receiving device of the backscatter signal.

Alternatively, the first configuration information is predefined.

In some embodiments, the communication device 400 has a low power consumption receiver, and the OFDM signal is received by the low power consumption receiver.

In some embodiments, the communication device 400 has a low power consumption receiver and a main receiver, and the OFDM signal is received by the low power consumption receiver or the main receiver. The power consumption of the low power consumption receiver is lower than that of the main receiver.

In some embodiments, the communication device 400 has a backscatter transmitter, and the backscatter signal is transmitted by the backscatter transmitter.

Optionally, in some embodiments, a communication unit may be a communication interface or a transceiver, or an input/output interface of a communication chip or a system on chip. The processing unit mentioned above may be one or more processors.

It should be understood that the communication device 400 according to the embodiments of the present application may correspond to the first device or the backscatter device in the method embodiments of the present application, and the above and other operations and/or functions of each unit in the communication device 400 are respectively for implementing corresponding processes of the first device or the backscatter device in the method shown in FIGS. 6 to 18, and details are not repeated here for the sake of brevity.

FIG. 20 shows a schematic block diagram of a communication device 500 in accordance with embodiments of the present application. As shown in FIG. 20, the communication device 500 includes: a communication unit 510 for receiving a backscatter signal, where the backscatter signal is obtained by the first device performing backscattering on a signal on a total bandwidth or a partial bandwidth of an orthogonal frequency division multiplexing (OFDM) signal.

In some embodiments, the backscatter signal is obtained by the first device performing backscattering on the OFDM signal as a carrier signal.

In some embodiments, the backscatter signal is obtained by the first device treating the OFDM signal as multiple carrier signals and performing backscattering on the multiple carrier signals respectively. Each carrier signal includes a signal on a partial bandwidth of the OFDM signal;
the backscatter signal is obtained by performing backscattering on the multiple carrier signals respectively.

In some embodiments, the bandwidths occupied by the multiple carrier signals do not overlap with each other.

In some embodiments, the first device includes a plurality of backscatter communication modules, and the plurality of backscatter communication modules are configured to perform backscattering on the plurality of carrier signals respectively.

In some embodiments, the backscatter signal is obtained by the first device performing backscattering on a signal, as a carrier signal, on a partial bandwidth of the OFDM signal.

In some embodiments, a unit of the backscatter signal in a time domain is a backscatter symbol, and a unit of the OFDM signal in a time domain is an OFDM symbol. A symbol length of a backscatter symbol is a symbol length of K OFDM symbols, where K is greater than 1.

In some embodiments, K is configured by the communication device 500, alternatively, K is predefined.

In some embodiments, a symbol length of a backscatter symbol is a minimum unit for a target receiving device of the OFDM signal to perform channel estimation in the time domain when receiving the OFDM signal.

In some embodiments, a backscatter symbol and K OFDM symbols are aligned in a time domain.

In some embodiments, a unit of the backscatter signal in the frequency domain is a backscatter frequency domain unit, and a unit of the OFDM signal in the frequency domain is a physical resource block (PRB). A size of a backscatter frequency domain unit is a size of M PRBs, where M is a positive integer.

In some embodiments, a backscatter frequency domain unit and M PRBs are aligned in a frequency domain.

In some embodiments, a minimum bandwidth of a carrier signal used by the first device for backscattering is a minimum unit for the target receiving device of the OFDM signal to perform channel estimation in the frequency domain when receiving the OFDM signal.

In some embodiments, the communication unit 510 is further configured to:
transmit first configuration information, where the first configuration information is configured to configure a resource location of a carrier signal used by the first device to perform backscattering and/or a resource location of a backscatter signal of a carrier signal used by the first device to perform backscattering.

In some embodiments, the first configuration information includes at least one of the following:
frequency information used by the first device to perform backscattering on the OFDM signal, time information used by the first device to transmit the backscatter signal, or frequency information used by the first device to transmit the backscatter signal.

In some embodiments, the time information used by the first device to transmit the backscatter signal includes at least one of the following:
start time information, duration information or occupied time unit information for the first device to transmit the backscatter signal.

In some embodiments, the frequency information used by the first device to perform backscattering on the OFDM signal is represented by a frequency domain unit of the OFDM signal, or is represented by a frequency domain unit of the backscatter signal.

In some embodiments, the time information used by the first device to transmit the backscatter signal is represented by a time domain unit of the OFDM signal, or is represented by a time domain unit of the backscatter signal.

In some embodiments, the frequency information used by the first device to transmit the backscatter signal is represented by a frequency domain unit of the OFDM signal, or is represented by a frequency domain unit of the backscatter signal.

In some embodiments, the first configuration information is configured by the communication device 500.

Alternatively, the first configuration information is predefined.

In some embodiments, the first device has a backscatter transmitter, and the backscatter signal is transmitted by the backscatter transmitter.

In some embodiments, the first device has a low power consumption receiver, and the OFDM signal is received by the low power consumption receiver.

In some embodiments, the first device has a low power consumption receiver and a main receiver, and the OFDM signal is received by the low power consumption receiver or the main receiver. The power consumption of the low power consumption receiver is lower than that of the main receiver.

In some embodiments, the communication device 500 is a network device or a terminal device.

Optionally, in some embodiments, the communication unit may be a communication interface or a transceiver, or an input/output interface of a communication chip or a system on chip. A processing unit may be one or more processors.

It should be understood that the communication device 500 according to the embodiments of the present application may correspond to the second device in the method embodiments of the present application, and the above and other operations and/or functions of each unit of the communication device 500 are respectively for implementing corresponding processes of the second device in the method embodiments shown in FIGS. 6 to 18, and details are not repeated here for the sake of brevity.

FIG. 21 is a schematic structural diagram of a communication device 600 in the embodiments of the present application. The communication device 600 shown in FIG. 21 includes a processor 610, and the processor 610 may call a computer program from a memory and run the computer program to implement the methods in the embodiments of the present application.

Optionally, as shown in FIG. 21, the communication device 600 may further include a memory 620. The processor 610 may call the computer program from the memory 620 and run the computer program to implement the method in the embodiment of the present application.

The memory 620 may be a separate device independent of the processor 610, or may be integrated into the processor 610.

Optionally, as shown in FIG. 21, the communication device 600 may further include a transceiver 630, and the processor 610 may control the transceiver 630 to communicate with other devices, specifically, may transmit information or data to other devices, or receive information or data transmitted by other devices.

The transceiver 630 may include a transmitter and a receiver. The transceiver 630 may further include an antenna, and the number of the antenna(s) may be one or more.

Optionally, the communication device 600 may specifically be the first device or the backscatter device in the embodiments of the present application, and the communication device 600 may implement the corresponding processes implemented by the first device or the backscatter device in each method of the embodiment of the present application, which will not be described again for the sake of brevity.

Optionally, the communication device 600 may specifically be the second device (i.e., the target receiving device of the backscatter signal) in the embodiments of the present application, and the communication device 600 may implement the corresponding processes implemented by the second device in each method of the embodiment of the present application, which will not be described again for the sake of brevity.

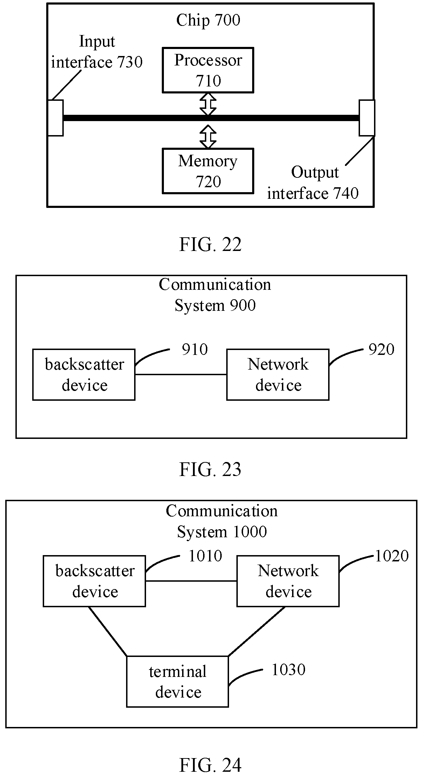

FIG. 22 is a schematic structural diagram of a chip in embodiments of the present application. The chip 700 shown in FIG. 22 includes a processor 710, and the processor 710 may call a computer program from a memory and run the computer program to implement the method in the embodiments of the present application.

Optionally, as shown in FIG. 22, the chip 700 may further include a memory 720. The processor 710 may call the computer program from the memory 720 and run the computer program to implement the method in the embodiments of the present application.

The memory 720 may be a separate device independent of the processor 710, or may be integrated into the processor 710.

Optionally, the chip 700 may further include an input interface 730. The processor 710 may control the input interface 730 to communicate with other devices or chips, and specifically, may obtain information or data sent by other devices or chips.

Optionally, the chip 700 may further include an output interface 740. The processor 710 may control the output interface 740 to communicate with other devices or chips, and specifically, may output information or data to other devices or chips.

Optionally, the chip may be applied to the first device or the backscatter device in the embodiments of the present application, and the chip may implement the corresponding processes implemented by the first device or the backscatter device in each method of the embodiments of the present application. For the sake of brevity, details are not repeated here.

Optionally, the chip may be applied to the second device in the embodiments of the present application, and the chip may implement the corresponding processes implemented by the second device in each method of the embodiments of the present application. For the sake of brevity, details are not repeated here.

It should be understood that the chip mentioned in the embodiments of the present application may also be called a system-level chip, a system chip, a chip system or a system-on-chip.

FIG. 23 is a schematic block diagram of a communication system 900 provided in embodiments of the present application. As shown in FIG. 23, the communication system 900 includes a backscatter device 910 and a network device 920.

The backscatter device 910 may be configured to implement the corresponding functions implemented by the first device or the backscatter device in the above methods, and the network device 920 may be configured to implement the corresponding functions implemented by the second device in the above methods. For the sake of brevity, details are not repeated here.

FIG. 24 is a schematic block diagram of another communication system 900 provided in embodiments of the present application. As shown in FIG. 24, the communication system 900 includes a backscatter device 1010, a network device 1020 and a terminal device 1030.

The backscatter device 1010 may be configured to implement the corresponding functions implemented by the first device or the backscatter device in the above methods, the network device 1020 may be configured to implement the corresponding functions implemented by the third device in the above methods, and the terminal device 1030 may be configured to implement the corresponding functions implemented by the second device in the above methods. For the sake of brevity, details are not repeated here.

It should be understood that the processor in the embodiments of the present application may be an integrated circuit chip with signal processing capabilities. In the implementation process, each step in the above method embodiments may be completed by an integrated logic circuit of hardware in a processor or instructions in a software form in the processor. The above processor may be a general purpose processor, a digital signal processor (DSP), an application specific integrated circuit (ASIC), a field programmable gate array (FPGA) or another programmable logic device, a discrete gate, a transistor logic device, or a discrete hardware component, which may implement or execute the disclosed methods, steps and logic block diagrams in the embodiments of the present disclosure. The general purpose processor may be a microprocessor, or the processor may be any conventional processor. The steps of the methods disclosed in conjunction with the embodiments of the present application may be directly implemented as being executed by the hardware decoding processor, or may be implemented by a combination of the hardware and software modules in the decoding processor. The software module may be located in a random memory, a flash memory, a read-only memory, a programmable read-only memory, an electrically erasable programmable memory, a register or other mature storage media in the art. The storage medium is located in the memory, and the processor reads the information in the memory and completes the steps of the above method in combination with its hardware.

It will be understood that the memory in the embodiments of the present application may be a volatile memory or a non-volatile memory, or may include both volatile and non-volatile memories. The non-volatile memory may be a read-only memory (ROM), a programmable read-only memory (Programmable ROM, PROM), an erasable programmable read-only memory (Erasable PROM, EPROM), an electrically erasable programmable read-only memory (Electrically EPROM, EEPROM) or a flash memory. The volatile memory may be a random access memory (RAM), which is used as an external cache. As an example but not limitation, a variety of forms of RAMs are available, such as a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchronous link dynamic random access memory (Synchlink DRAM, SLDRAM) and a direct memory bus random access memory (Direct Rambus RAM, DR RAM). It should be noted that the memory of the systems and methods described herein is intended to include, but is not limited to, these and any other suitable types of memories.

It should be understood that the above memory is exemplary but not limited illustration. For example, the memory in the embodiments of the present application may be a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), or a direct memory bus random access memory (Direct Rambus RAM, DR RAM). That is, the memory in the embodiments of the present application is intended to include, but not limited to, these and any other suitable types of memories.

The embodiments of the present application further provide a computer-readable storage medium for storing a computer program.

Optionally, the computer-readable storage medium may be applied to the network device in the embodiments of the present application, and the computer program enables a computer to perform the corresponding processes implemented by the network device in the various methods in the embodiments of the present application, which will not be repeated here for the sake of brevity.

Optionally, the computer-readable storage medium may be applied to the mobile terminal/terminal device in the embodiments of the present application, and the computer program enables a computer to perform the corresponding processes implemented by the mobile terminal/terminal device in the various methods in the embodiments of the present application, which will not be repeated here for the sake of brevity.

The embodiments of the present application further provide a computer program product including computer program instructions.

Optionally, the computer program product may be applied to the network device in the embodiments of the present application, and the computer program instructions enable a computer to perform the corresponding processes implemented by the network device in the various methods in the embodiments of the present application, which will not be repeated here for the sake of brevity.

Optionally, the computer program product may be applied to the mobile terminal/terminal device in the embodiments of the present application, and the computer program instructions enable a computer to perform the corresponding processes implemented by the mobile terminal/terminal device in the various methods in the embodiments of the present application, which will not be repeated here for the sake of brevity.

The embodiments of the present application further provide a computer program.

Optionally, the computer program may be applied to the network device in the embodiments of the present application. The computer program, when running on a computer, enables the computer to perform the corresponding processes implemented by the network device in the various methods in the embodiments of the present application, which will not be repeated here for the sake of brevity.

Optionally, the computer program may be applied to the mobile terminal/terminal device in the embodiments of the present application. The computer program, when running on a computer, enables the computer to perform the corresponding processes implemented by the mobile terminal/terminal device in the various methods in the embodiments of the present application, which will not be repeated here for the sake of brevity.

Those of ordinary skill in the art will appreciate that units and algorithm steps of all examples described in conjunction with the embodiments disclosed herein may be implemented by electronic hardware, or by a combination of computer software and electronic hardware. Whether these functions are performed in hardware or software depends on the specific application and design constraints of the technical solutions. A professional may use different methods to implement the described functions for each specific application, but such implementation should not be considered beyond the scope of the present application.

It may be clearly understood by those skilled in the art that for convenience and brevity of the description, the specific operating processes of the system, device and unit described above may refer to the corresponding processes in the above method embodiments, and details will not be repeated here.

In several embodiments provided by the present application, it should be understood that the disclosed system, device and method may be implemented in other ways. For example, the device embodiments described above are only schematic. For example, the division of the units is only division of logical functions, and there may be other division ways in the actual implementation, for example, a plurality of units or components may be combined or integrated into another system, or some features may be ignored or not implemented. In addition, the mutual coupling or direct coupling or communication connection illustrated or discussed may be indirect coupling or communication connection through some interfaces, devices or units, and may be in electrical, mechanical or other forms.

The units described as separation components may or may not be physically separated, and the components shown as units may or may not be physical units, that is, they may be located at one place, or may be distributed onto a plurality of network units. Some or all of the units may be selected according to actual requirements to implement the purpose of the schemes of the embodiments.

In addition, various functional units in various embodiments of the present application may be integrated into one processing unit, or various units may exist physically alone, or two or more units may be integrated into one unit.

If the functions are implemented in the form of a software functional unit and sold or used as an independent product, they may be stored in a computer readable storage medium. Based on such an understanding, the technical solution of the present application, in essence or the part of the technical solution that contributes to the prior art or the part of the technical solution, may be embodied in the form of a software product, and the computer software product is stored in a storage medium and includes several instructions for making a computer device (which may be a personal computer, a server, a network device, or the like) to perform all or part of the steps of the methods described in various embodiments of the present application. The aforementioned storage media includes an SB flash drive (U disk), a mobile hard disk, a read-only memory (ROM), a random access memory (RAM), a disk, an optical disk, and other mediums that may store program codes.

The foregoing descriptions are merely specific implementations of the present application, but the protection scope of the present application is not limited thereto. Any skilled person in the art could readily conceive of changes or replacements within the technical scope of the present application, which shall be all included in the protection scope of the present application. Therefore, the protection scope of the present application shall be subject to the protection scope of claims.

## Claims

1. A wireless communication method, comprising:
performing , by a first device, backscattering on a signal on a total bandwidth or a partial bandwidth of an orthogonal frequency division multiplexing (OFDM) signal to obtain a backscatter signal.

2. The method according to claim 1, wherein the backscatter signal is obtained by the first device performing backscattering on the OFDM signal as a carrier signal.

3. The method according to claim 1, wherein the backscatter signal is obtained by the first device taking the OFDM signal as multiple carrier signals and performing backscattering on the multiple carrier signals, wherein each carrier signal comprises a signal on a partial bandwidth of the OFDM signal.

4. The method according to claim 3, wherein bandwidths occupied by the multiple carrier signals do not overlap with each other.

5. The method according to claim 3 or 4, wherein the first device comprises a plurality of backscatter communication modules, and the plurality of backscatter communication modules are configured to perform backscattering on the multiple carrier signals respectively.

6. The method according to claim 1, wherein the backscatter signal is obtained by the first device performing backscattering on a signal, as a carrier signal, on a partial bandwidth of the OFDM signal.

7. The method according to any one of claims 1 to 6, wherein a unit of the backscatter signal in a time domain is a backscatter symbol, a unit of the OFDM signal in the time domain is an OFDM symbol, and a symbol length of the backscatter symbol is a symbol length of K OFDM symbols, wherein K is greater than 1.

8. The method according to claim 7, wherein K is configured by a target receiving device of the backscatter signal, or K is predefined.

9. The method according to claim 7 or 8, wherein the symbol length of the backscatter symbol is a minimum unit for a target receiving device of the OFDM signal to perform channel estimation in the time domain when receiving the OFDM signal.

10. The method according to any one of claims 7 to 9, wherein the backscatter symbol and the K OFDM symbols are aligned in the time domain.

11. The method according to any one of claims 1 to 10, wherein a unit of the backscatter signal in a frequency domain is a backscatter frequency domain unit, a unit of the OFDM signal in the frequency domain is a physical resource block (PRB), and a size of the backscatter frequency domain unit is a size of M PRBs, wherein M is a positive integer.

12. The method according to claim 11, wherein the backscatter frequency domain unit and the M PRBs are aligned in the frequency domain.

13. The method according to any one of claims 1 to 12, wherein a minimum bandwidth of a carrier signal used by the first device for backscattering is a minimum unit for a target receiving device of the OFDM signal to perform channel estimation in the frequency domain when receiving the OFDM signal.

14. The method according to any one of claims 1 to 13, wherein the backscatter signal comprises at least one data symbol, and the method further comprises:
mapping, by the first device, the at least one data symbol onto at least one backscatter time-frequency unit in a time domain and/or frequency domain, wherein each backscatter time-frequency unit is composed of a backscatter symbol and a backscatter frequency domain unit.

15. The method according to claim 14, wherein the first device mapping the at least one data symbol onto the at least one backscatter time-frequency unit in the time domain and/or frequency domain, comprises:
mapping, by the first device, the at least one data symbol onto the at least one backscatter time-frequency unit in sequence in an order of time domain first and frequency domain later.

16. The method according to claim 14, wherein the first device mapping the at least one data symbol onto the at least one backscatter time-frequency unit in the time domain and/or frequency domain, comprises:
mapping, by the first device, the at least one data symbol onto the at least one backscatter time-frequency unit in sequence in an order of frequency domain first and time domain later.

17. The method according to any one of claims 14 to 16, wherein the first device mapping the at least one data symbol in a time domain order, comprises:
mapping the at least one data symbol onto the at least one backscatter time-frequency unit in sequence in an ascending order or a descending order of numbering of the at least one backscatter time-frequency unit in the time domain.

18. The method according to any one of claims 14 to 17, wherein the first device mapping the at least one data symbol in a frequency domain order, comprises:
mapping the at least one data symbol onto the at least one backscatter time-frequency unit in sequence in an ascending order or a descending order of numbering of the at least one backscatter time-frequency unit in the frequency domain from.

19. The method according to any one of claims 1 to 18, wherein the first device performing backscattering on a signal on a partial bandwidth of the OFDM signal to obtain the backscatter signal, comprises:
performing, by the first device, backscattering on the signal on the partial bandwidth of the OFDM signal according to first configuration information to obtain the backscatter signal, wherein the first configuration information is configured to configure a resource location of a carrier signal used to perform backscattering and/or a resource location of the backscatter signal.

20. The method according to claim 19, wherein the first configuration information comprises at least one of following:
frequency information used by the first device to perform backscattering on the OFDM signal or time information used by the first device to transmit the backscatter signal.

21. The method according to claim 20, wherein the time information used by the first device to transmit the backscatter signal comprises at least one of following:
start time information, duration information or occupied time unit information for the first device to transmit the backscatter signal.

22. The method according to claim 20 or 21, wherein the frequency information used by the first device to perform backscattering on the OFDM signal is represented by a frequency domain unit of the OFDM signal, or is represented by a frequency domain unit of the backscatter signal.

23. The method according to any one of claims 20 to 22, wherein the time information used by the first device to transmit the backscatter signal is represented by a time domain unit of the OFDM signal, or is represented by a time domain unit of the backscatter signal.

24. The method according to any one of claims 19 to 23, wherein
the first configuration information is configured by a target receiving device of the backscatter signal, or
the first configuration information is predefined.

25. The method according to any one of claims 1 to 24, wherein the first device has a low power consumption receiver, and the OFDM signal is received by the low power consumption receiver.

26. The method according to any one of claims 1 to 24, wherein the first device has a low power consumption receiver and a main receiver, and the OFDM signal is received by the low power consumption receiver or the main receiver, wherein power consumption of the low power consumption receiver is lower than power consumption of the main receiver.

27. The method according to any one of claims 1 to 26, wherein the first device has a backscatter transmitter, and the backscatter signal is transmitted by the backscatter transmitter.

28. A wireless communication method, comprising:
receiving, by a second device, a backscatter signal, wherein the backscatter signal is obtained by a first device performing backscattering on a signal on a total bandwidth or a partial bandwidth of an orthogonal frequency division multiplexing (OFDM) signal.

29. The method according to claim 28, wherein the backscatter signal is obtained by the first device performing backscattering on the OFDM signal as a carrier signal.

30. The method according to claim 28, wherein the backscatter signal is obtained by the first device taking the OFDM signal as multiple carrier signals and performing backscattering on the multiple carrier signals, wherein each carrier signal includes a signal on a partial bandwidth of the OFDM signal; and
the backscatter signal is obtained by performing backscattering on the multiple carrier signals respectively.

31. The method according to claim 30, wherein bandwidths occupied by the multiple carrier signals do not overlap with each other.

32. The method according to claim 30 or 31, wherein the first device comprises a plurality of backscatter communication modules, and the plurality of backscatter communication modules are configured to perform backscattering on the multiple carrier signals respectively.

33. The method according to claim 32, wherein the backscatter signal is obtained by the first device performing backscattering on a signal, as a carrier signal, on a partial bandwidth of the OFDM signal.

34. The method according to any one of claims 28 to 33, wherein a unit of the backscatter signal in a time domain is a backscatter symbol, a unit of the OFDM signal in the time domain is an OFDM symbol, and a symbol length of the backscatter symbol is a symbol length of K OFDM symbols, wherein K is greater than 1.

35. The method according to claim 34, wherein K is configured by a target receiving device of the backscatter signal, or K is predefined.

36. The method according to claim 34 or 35, wherein the symbol length of the backscatter symbol is a minimum unit for a target receiving device of the OFDM signal to perform channel estimation in the time domain when receiving the OFDM signal.

37. The method according to any one of claims 34 to 36, wherein the backscatter symbol and the K OFDM symbols are aligned in the time domain.

38. The method according to any one of claims 28 to 37, wherein a unit of the backscatter signal in a frequency domain is a backscatter frequency domain unit, a unit of the OFDM signal in the frequency domain is a physical resource block (PRB), and a size of the backscatter frequency domain unit is a size of M PRBs, wherein M is a positive integer.

39. The method according to claim 38, wherein the backscatter frequency domain unit and the M PRBs are aligned in the frequency domain.

40. The method according to any one of claims 28 to 39, wherein a minimum bandwidth of a carrier signal used by the first device for backscattering is a minimum unit for a target receiving device of the OFDM signal to perform channel estimation in the frequency domain when receiving the OFDM signal.

41. The method according to any one of claims 28 to 40, further comprising:
transmitting, by the second device, first configuration information, wherein the first configuration information is configured to configure a resource location of a carrier signal used by the first device to perform backscattering and/or a resource location of the backscatter signal.

42. The method according to claim 41, wherein the first configuration information comprises at least one of following:
frequency information used by the first device to perform backscattering on the OFDM signal or time information used by the first device to transmit the backscatter signal.

43. The method according to claim 42, wherein the time information used by the first device to transmit the backscatter signal comprises at least one of following:
start time information, duration information or occupied time unit information for the first device to transmit the backscatter signal.

44. The method according to claim 42 or 43, wherein the frequency information used by the first device to perform backscattering on the OFDM signal is represented by a frequency domain unit of the OFDM signal, or is represented by a frequency domain unit of the backscatter signal.

45. The method according to any one of claims 42 to 44, wherein the time information used by the first device to transmit the backscatter signal is represented by a time domain unit of the OFDM signal, or is represented by a time domain unit of the backscatter signal.

46. The method according to any one of claims 42 to 45, wherein
the first configuration information is configured by a target receiving device of the backscatter signal, or
the first configuration information is predefined.

47. The method according to any one of claims 28 to 46, wherein the first device has a backscatter transmitter, and the backscatter signal is transmitted by the backscatter transmitter.

48. The method according to any one of claims 28 to 47, wherein the first device has a low power consumption receiver, and the OFDM signal is received by the low power consumption receiver.

49. The method according to any one of claims 28 to 47, wherein the first device has a low power consumption receiver and a main receiver, and the OFDM signal is received by the low power consumption receiver or the main receiver, wherein power consumption of the low power consumption receiver is lower than power consumption of the main receiver.

50. The method according to any one of claims 28 to 49, wherein the second device is a network device or a terminal device.

51. A communication device , comprising:
a processing unit configured to perform backscattering on a signal on a total bandwidth or a partial bandwidth of an orthogonal frequency division multiplexing (OFDM) signal to obtain a backscatter signal.

52. A communication device, comprising:
a communication unit configured to receive a backscatter signal, wherein the backscatter signal is obtained by a first device performing backscattering on a signal on a total bandwidth or a partial bandwidth of an orthogonal frequency division multiplexing (OFDM) signal.

53. A communication device, comprising: a processor and a memory, wherein the memory is configured to store a computer program, and the processor is configured to call the computer program stored in the memory and run the computer program to perform the method according to any one of claims 1 to 27, or the method according to any one of claims 28 to 50.

54. A chip, comprising: a processor configured to call a computer program from a memory and run the computer program to enable a device equipped with the chip to perform the method according to any one of claims 1 to 27, or the method according to any one of claims 28 to 50.

55. A computer-readable storage medium, configured to store a computer program, wherein the computer program enables a computer to perform the method according to any one of claims 1 to 27, or the method according to any one of claims 28 to 50.

56. A computer program product, comprising computer program instructions, wherein the computer program instructions enable a computer to perform the method according to any one of claims 1 to 27, or the method according to any one of claims 28 to 50.

57. A computer program, wherein the computer program enables a computer to perform the method according to any one of claims 1 to 27, or the method according to any one of claims 28 to 50.
